(19) **Europäisches Patentamt**
**European Patent Office**
**Office européen des brevets**

(11) **EP 3 777 074 B1**

(12) **EUROPEAN PATENT SPECIFICATION**

(45) Date of publication and mention
of the grant of the patent:
**09.11.2022 Bulletin 2022/45**

(21) Application number: **19714218.5**

(22) Date of filing: **04.04.2019**

(51) International Patent Classification (IPC):
**H04L 9/40** *(2022.01)*      **H04L 67/104** *(2022.01)*

(52) Cooperative Patent Classification (CPC):
**H04L 63/0823; H04L 67/1057; H04L 67/1068;**
H04L 63/061; H04L 67/1046; H04W 12/67

(86) International application number:
**PCT/EP2019/058465**

(87) International publication number:
**WO 2019/193081 (10.10.2019 Gazette 2019/41)**

(54) **METHOD FOR VALIDATING A NODE**

VERFAHREN ZUR VALIDIERUNG EINES KNOTENS

PROCÉDÉ DE VALIDATION D'UN NOEUD

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.04.2018 EP 18382231**

(43) Date of publication of application:
**17.02.2021 Bulletin 2021/07**

(73) Proprietor: **Banco Bilbao Vizcaya Argentaria, S.A.
48005 Bilbao (ES)**

(72) Inventor: **DEL VAL SANTOS, Jorge
48005 Bilbao (ES)**

(74) Representative: **ABG Intellectual Property Law,
S.L.
Avenida de Burgos, 16D
Edificio Euromor
28036 Madrid (ES)**

(56) References cited:
**EP-A2- 1 282 289**

- **RUNFANG ZHOU ET AL: "Gossip-based
Reputation Aggregation for Unstructured
Peer-to-Peer Networks", PARALLEL AND
DISTRIBUTED PROCESSING SYMPOSIUM, 2007.
IPDPS 2007. IEEE INTERNATIONAL, IEEE, PI, 1
March 2007 (2007-03-01), pages 1-10,
XP031175340, ISBN: 978-1-4244-0909-9**
- **PRASHANT DEWAN ET AL: "P2P Reputation
Management Using Distributed Identities and
Decentralized Recommendation Chains", IEEE
TRANSACTIONS ON KNOWLEDGE AND DATA
ENGINEERING, IEEE SERVICE CENTER, LOS
ALAMITOS, CA, US, vol. 22, no. 7, 1 July 2010
(2010-07-01), pages 1000-1013, XP011293124,
ISSN: 1041-4347**
- **RUNFANG ZHOU ET AL: "GossipTrust for Fast
Reputation Aggregation in Peer-to-Peer
Networks", IEEE TRANSACTIONS ON
KNOWLEDGE AND DATA ENGINEERING, IEEE
SERVICE CENTER, LOS ALAMITOS, CA, US, vol.
20, no. 9, 1 September 2008 (2008-09-01), pages
1282-1295, XP011225267, ISSN: 1041-4347, DOI:
10.1109/TKDE.2008.48**

**Description**

**TECHNICAL FIELD OF THE INVENTION**

The present invention belongs to the field of validation of nodes in a telecommunication network and, more particularly, to the validity of the public key of the nodes in decentralized peer to peer networks, the *so-called* P2P networks.

Particularly, the present invention relates to a method for validating a digital signature of at least one node, each node identifying a user of the network. This method is characterized by a set of analytical steps that allow establishing, for example, a numerical value for the reliability of public cryptographic keys from other nodes -*users*- of the network. As the nodes are used by users, the present invention is configured to validate a user, i.e., his/hers digital signature.

**BACKGROUND OF THE INVENTION**

In the state of the art, a given user identifier normally holds a specific key. Such key is the public key cryptography which allows authentication in communications by a pair of private and public keys. This can establish with certainty that a message signed with a private key was indeed signed by the owner of the associated public key in a simple and universally verifiable manner. In the context of networks, such user also holds a set of valid certifications, such as digital signatures, along with statements regarding their trustworthiness. This is known as ownertrust.

In other words, the ownertrust reflects the level of certainty any other user may put into the specific key of the given user when the latter signs other keys. In the absence of any evidence indicating otherwise, the user is to be considered to be legitimately attached to its specific key. And therefore the user is considered as "valid" or trustworthy.

A valid user is crucial for authentication of TLS/SSL communications. For example, when a user logs in to a new server for the first time, it is asked by the system if you consider valid the server's key by verifying the fingerprint. However, unless the user has accessed to the server's key fingerprint through a secure out-of-band channel, which is time expensive and inefficient, there is no way to verify that the fingerprint the user is presented with is indeed that of the server that the user is really trying to connect to.

A known approach in the state of the art is the digital reputation. In contrast to the classical system where a central authority validates the actions of the users, in digital reputation the users are the ones who validate their own actions.

Nevertheless, although this approach is more efficient, it still depends on a central server which centralizes all the endorsements of the users. Thus, the central server must be trusted by the end users and it carries the inherent risk of failure of centralized systems.

US 7213047 B2 discloses a system and method which uses a mobile agent to gather reputation information for use in evaluating trust in nodes P2P networks. However, it also depends on a central element, in this case the mobile agent, and as a consequence, the users must blindly consider valid this element inheriting the problems of TLS/SSL communications.

Additionally, other known approaches are based on blockchain technology. However, this technology requires a *proof* of *work* in order to verify the causality of the items stored in the blockchain. Moreover, in blockchain technology, it is required that the nodes of network be in the same state all the timesteps. As a consequence of the above problems, blockchain technology has extreme computational cost resulting in an inefficient solution to the known problems of centralized systems.

The protocols OpenPGP and GnuPGP offer two discrete levels of validation. However this approach is limited by the number of jumps or distance between the nodes where the validation is calculated, and as a consequence, the accuracy of said protocols are limited and are not valid for any other applications.

US 2003/0028585 A1 discloses method for calculating the trust of a node using the *EigenTrust* algorithm. This algorithm calculate trust scores as a combination of those among neighbors, arriving to the first eigenvector of a combination matrix, that could also be seen as solving a fixed point equation. However, the final solution of the trust scores is the same for every node in the network, i.e., this approach is impersonal. An undesirable consequence of having the same trust score among all nodes on the trust of a particular node is that this node may be excluded from the whole network for being considered untrustful if its resulting trust score is too low; and no other or user could see it otherwise if it do not agree, but instead would have to accept the verdict of the network. Therefore, this method is not valid for validating a digital signature in a specific node.

Other validation management methods are *event based*. The validation is calculated based on objective events of the nodes in the network. However said events may be failed downloads or malicious results which may not be related to the ownertrust problem.

Other methods for calculating trust scores of the nodes of a peer to peer network are the articles *"Gossip-based Reputation Aggregation for Unstructured Peer-to-Peer Networks"* and "GP2P *Reputation Management Using Distributed Identities and Decentralized Recommendation Chains"*. However, both methods calculates global reputation scores;

that is, every node has a unique trust score and the rest of the network trust in it or not accordingly as a whole.

There is a need to provide a method which can rigorously validate a digital signature of the nodes of the P2P network which overcomes the above mentioned problems of the state of the art.

## SUMMARY OF THE INVENTION

The present invention provides a solution for the aforementioned problems, by a computer-implemented method for validating a digital signature of at least one node in a peer to peer telecommunication network according to claim 1 and a data processing system, a computer program and a computer-readable storage medium according to claims 12 to 14. In dependent claims, preferred embodiments of the invention are defined.

In a first inventive aspect, the invention provides a computer-implemented method for validating a digital signature of at least one node in a peer to peer network, wherein said network comprises at least three nodes, for example nodes i, j and w,

wherein each node is configured to store a database and at least one trust score s, for example a trust score $s_{ij}$ or $s_{iw}$ of a node i in respect with another node j or w,

wherein each database is configured to store at least one trust endorsement value t of a node in respect with another node defining a direct endorsement connection between said nodes, for example a trust endorsement value $t_{ij}$ of a node i in respect with another node j defining a direct endorsement connection between nodes i and j,

wherein the trust endorsement value t is greater or equal than 0 and less or equal than 1, and

the computer-implemented method comprising the steps of,

a) executing in the plurality of nodes a gossip algorithm, receiving in each node at least one endorsement message and obtaining in each node an updated version of its database, wherein the updated database in each node comprises the trust endorsement values t's of at least one different node of the peer to peer network; for example, the updated database of the node i comprises at least the trust endorsement value $t_{jw}$ of the node j in respect with the nodes w;

b) locally calculating in each node a trust score s assigned to other node of the network, for each node of its database, based on the data contained in said database; for example, the node i calculates the trust scores $s_{ij}$ and $s_{iw}$ assigned to the nodes j and w; and

c) locally validating each digital signature received in each node, wherein each digital signature is issued by the at least one node of its database, based on the value of said trust score (s) of the peer to peer network, obtaining in each node a different validation of each digital signature issued by each node of the network; for example, if the trust score of a node i with respect to a node j, $s_{ij}$, satisfies a certain condition, then the digital signatures issued by node j and received by node i will be validated, and

d) if there is a change in at least one trust endorsement value t of a database of a node or a at least one new trust endorsement value t, sending the changed or new trust endorsement value t to each neighbour node and executing step a), and

e) if a node is deleted or new node is added in the peer to peer network, executing step a).

The method of the invention defines two networks. The first type of network is the connection network wherein the peer to peer network is implemented. The connection network may be a wireless or a wired network or a combination of both, wherein any known protocol of communications and wired and wireless technologies can be implemented in order to enable the communication between the nodes of the peer to peer network. Preferably, all the nodes of the network are connected to each other. As a neighbour node it should be understood a node which is directly connected with a node.

The nodes may be a personal computer, a server, a smartphone, a tablet, an application or a combination of them, for example, an application executed in such devices. As application it should be understood a computer program comprising instructions which, when the program is executed by a computer, cause the computer to carry out the functions of a node. As it is known, any of said elements may work as a client or server in a peer to peer network. The nodes of the peer to peer network are configured to use any protocol of communications allowing an exchange of information between them.

Further, as it is indicated in the first inventive aspect, the *gossip algorithm* shares the database located in each node to its neighbors, therefore, this algorithm runs over first type of network, i.e., the connection network.

Thus, it should be understood as a gossip algorithm, a consensus protocol where there is a diffusion of notifications of the connections over the nodes of the peer to peer network. Thus, every node is constantly listening to its neighbors in the connection network and updating its database in case of valid new items.

The second type of network is the network defined by the endorsement connections. This network is the endorsement network which is locally defined by each node. The trust endorsement value t is a value based on the experience of a node with other node. Preferably, each endorsement connection is directional, *i.e.* it is based on the experience of a particular node with other node, the trust endorsement value not necessarily being reciprocal.

The experience which gives rise to a trust endorsement value t is based on the data shared between said nodes as, for example, throughput of communication. In this example, if a node provides a high throughput of communication between the nodes or a good service provided from one node to other node, the node which contracts the service, or client node, can endorse the node which offers the service or server node. In other examples, the experience may be subjective, i.e., working experience with the user of one node or person impression of the user of one node.

According to the invention, the connection network comprises at least three nodes i, j and w, wherein the network of endorsement connections defines:

- a trust score $s_{ij}$ or $s_{iw}$ is defined of a node i in respect with another node j or w of the peer to peer network, and

- the trust endorsement value $t_{ij}$ is defined of a node i in respect with another node j of the peer to peer network defining a direct endorsement connection between nodes i and j.

As a consequence, the trust endorsement t is not bidirectional, that is, $t_{ij}$ may not have the same value of $t_{ji}$ (or even exists). Thus, although the nodes are physically connected through the connection network or peer to peer network, depending on the endorsement connections of a node i, the endorsement network of a node i may be different from the endorsement network of a node j or w.

Thus, the method according to the invention advantageously allows validating a node which is not directly connected to the node under consideration, this is, with which there is no trust endorsement value. In other words, the method provides a manner of validating nodes for which there was no trust path at the beginning, *i.e.* which were not directly connected in the endorsement network.

It should be understood as locally validating a digital signature of a node, the process of checking that a public key is associated to the identity of such node. On the other hand, verifying a digital signature is understood as checking with the public key of a node that said message or signature has been signed with the private key of said node.

Advantageously, a peer to peer network of interconnected nodes can manage the reputation and trust without any central validation authority. The invention allows a dynamic and robust estimation, so every node in the network can vary their endorsements at any time and the variation will be propagated through the network in a gossip-based manner.

As a consequence, every node will be able to locally calculate how much they can trust on any other node in the network in accordance to their calculated trust scores. As a result, each node may obtain a different trust score for other node of network. Thus, for example, a node i may validate a node j, but a node m may not validate the same node j. Advantageously, the invention allows obtaining a more rigorous validation than the methods known in the state of the art.

The present invention presents the following advantages:

- Transitivity: The final trust scores are transitive, i.e., they are based on trust paths from an origin node to other nodes.
- Personalization and non-homogeneity of trust scores: The trust scores are particularized to the direct endorsement connections of the nodes in the network. Advantageously, the method of the invention reaches specific trust scores for each node, making the method suitable for public key validation issue.

- Decentralization and reliability: Validation management can be maintained without any central server. The nodes of the connection network regulate themselves and thus the method increases the robustness to failures. Further, the method is decentralized by means of gossip-based consensus. As consensus it should be understood as the state of the peer to peer network where the nodes eventually reach the same stable state, i.e., no updates are performed in the database of each node, after an interval of time. Additionally, the method does not require any Proof of Work or PoW, which increases the efficiency of the invention.
- Softness of trust scores: The method of the present invention provides real scores between 0 and 1. Advantageously, each node reaches a quantitative estimation of how much they can trust a certain public key.

In a particular embodiment, steps b) to e) are performed in a concurrent manner in respect of step a). This embodiment should be understood as steps b) to e) are performed independently even if the step a) is currently performed. As mentioned above, the method of the invention addresses two levels of the network, the connection network, which represents the nodes connected in a peer to peer fashion, and the endorsement network, which represents the endorsement relation between the nodes. In this embodiment, the method comprises two concurrent processes: a gossip-based consensus of endorsements, and a local calculation of the trust scores.

Therefore, performing concurrently steps a) and b) allows that each node can locally calculate the trust score of each node independently of the state of the database the node.

Advantageously, these embodiments allow that the calculation of the validity of a node is independently to the other nodes, and as a consequence, said calculation does not affect to the other nodes. Consequently, the nodes do not need to be in the same state at all times as the gossip algorithms runs. Therefore, each node is configured to perform computations as its database grows, even if consensus has not been achieved yet in the peer to peer network.

In a particular embodiment, each node comprises at least one pair of public and private node key, and also the public keys of the rest of the nodes of the peer to peer network, wherein the public and private node key pairs are a public key and a private key related to each node. Each endorsement message comprises at least one trust endorsement value t, an index value associated to each trust endorsement value t and an endorsement signature. Additionally, the endorsement signature is signed with the private key, or sk, of the node which sent the at least one endorsement message. Preferably, said endorsement signature is the signature of said endorsement message. Further the gossip algorithm of step a) comprises the steps of:

a.1 in each node, listening to the other nodes of the network and detecting at least one endorsement message from said other nodes; and

a.2 for each detected endorsement message:

a.2.1 verifying the endorsement signature with the public key of said other node;

a.2.2 whether at least one trust endorsement value t of the endorsement message already exists in the database and the associated index of the endorsement message is higher than the index of the database, updating the trust endorsement value t in the database,

a.3 increasing the index value associated to the updated trust endorsement value t by one and signing said the at least one trust endorsement value t and the increased index of the database with the private key of the node obtaining an endorsement message;

a.4 sharing the endorsement message with each neighbour node.

The pair of public and private node key should be understood as the public and private keys used in asymmetric cryptography.

In an initial state, the database of each node, preferably, only comprise the trust endorsement values, due to the direct experience with other nodes of the network defining direct endorsement connections. When the gossip algorithm is executed, the database is updated with the trust endorsements of other nodes of the connection network. At an instant, the database of each node comprises

• the trust endorsement values *as such* due to the direct experience with other nodes of the network defining direct endorsement connections, and
• the endorsement data received from other nodes.

If the node does not have any direct experience with other nodes of the peer to peer network, its database may be empty, being understood as an isolated node. As the gossip algorithm is executed, its database will be updated, thus comprising the endorsement data received from other nodes. Nevertheless, in case said isolated node establishes a direct experience with any other nodes, a trust endorsement value t will be comprised in its database, and such node will send its trust endorsement value t, also using the gossip algorithm.

In a particular embodiment, between steps a.2.2) and a.3), the gossip algorithm of step a) further comprises: whether the at least one trust endorsement value t is new, adding the detected trust endorsement in the database.

In a particular embodiment, in step d) of the method, the step of sending further comprises:

- associating an index to the changed or new trust endorsement value t,

- signing the changed or new trust endorsement value t of the database and the associated index with the private key of the node, obtaining an endorsement message thereby;

- sharing the endorsement message with each neighbour node.

The above embodiments define the gossip algorithm. Throughout this entire document, the gossip algorithm is to be understood as a diffusion of the signed trust endorsement values t's of each node. Thus, every node is constantly listening to its neighbors and updating its database in case of valid, new trust endorsement and the nodes eventually reach the stable state, i.e., no updates are performed in the database of each node, after an interval of time. However, the peer to peer network does not have to be in the same state during the algorithm is executed, but instead, each node of the peer to peer network comprises a dynamic state or version of the database that will eventually lead to said stable state. Advantageously, due to the nature of the gossip algorithm, the causality of trust endorsements values of the database does not need to be verified and there is not any double-spending, which increases the efficiency of the method of the invention.

In a particular embodiment, the step of locally calculating in each node i, at least one trust score s assigned to other node of the network based on the data contained in its own database, comprises

- locally obtaining at least one direct and/or indirect endorsement connection of a node, wherein an indirect endorsement connection between two nodes is stablished by a concatenation of a plurality of direct endorsement connections through at least one node,

- if there is a direct endorsement connection, setting the trust score s as

$$s = t$$

In a particular embodiment, the step of locally obtaining at least one direct and/or indirect endorsement connection of node is performed by running a *breath-first search* or a *depth-first search* by said node.

In a particular embodiment, if there is an indirect endorsement connection, wherein if the endorsement connection between the node, where the step of locally calculating is been performed, and other node is different than a direct endorsement connection and an indirect endorsement connection, for example, there is not any endorsement connection, the step of locally calculating in each node at least one trust score s further comprises

- setting the trust endorsement value t between said two nodes to a default trust endorsement value, $t_d$, preferably $t_d$ is 0.4, and

wherein if the endorsement connection between a node, where the step of locally calculating is been performed, and other node is different than a direct endorsement connection the step of locally calculating in each node at least one trust score s further comprises iterating the following equation a number of iterations, n_max,

$$s_{ik;n+1} = \alpha s_{ik;n} + (1 - \alpha) \frac{\sum_{j \epsilon V} t_{jk} s_{ij;n}^{\beta+1}}{\sum_{j \epsilon V} a_{jk} s_{ij;n}^{\beta+\Phi(s_{ik;n})} + \epsilon}$$

wherein
wherein $\Phi(s_{ik;n})$ is a monotonously increasing function between 0 and 1, which is based on:

$$\sum_{j \epsilon V} a_{jk} s_{ij;n}^{\beta+1}$$

wherein the limit of $\Phi(s_{ik;n})$ tends to 1 when $\sum_{j \epsilon V} a_{jk} s_{ij;n}^{\beta+1}$ tends to infinite, and the function $\Phi(s_{ik;n})$ is 0 when $\sum_{j \epsilon V} a_{jk} s_{ij;n}^{\beta+1}$ is 0,

wherein $\beta$ is an integer number, being $\beta$ preferably a number between 1 and 6,

i is the node where the calculation is locally performed,

j is a node with direct endorsement connection with node k,

k is a node with indirect endorsement connection with node i,

$s_{ik;n}$ is the trust score given by node i to node k on iteration n, with $s_{ik,0}$ equal to 0.5,

V is set of nodes of the peer to peer network,

$a_{jk}$ is 0 if there is not a direct endorsement connection from node j to node k,

$a_{kj}$ is 1 if there is a direct endorsement connection,

$\alpha$ is a positive real number,

$\varepsilon$ is a positive number, preferably ten raised to minus eight.

In a particular embodiment, $\Phi (s_{ik;n})$ is calculated from the following expression:

$$\Phi(s_{ik;n}) = tanh\left( 3 \cdot \eta^{-1} \cdot \sum_{j \epsilon V} a_{jk} s_{ij;n}^{\beta+1} \right)$$

wherein $\eta$ is an integer number.

In a particular embodiment, if the iteration of the equation is the n-iteration, setting $s_{ik} = s_{ij;n}$ and/or iterating the equation until the following condition is fulfilled,

$$\frac{\left\|s_{ik;n+1} - s_{ik;n}\right\|}{\left\|s_{ik;n}\right\|} < \delta$$

wherein $\delta$ is a positive real number, preferably 0.005, and setting

$$s_{ik} = s_{ij;n+1}.$$

In the above embodiments, a direct endorsement connection for a node i should be understood as the endorsement connection from node i to other nodes of the peer to peer network from which the node i has a trust endorsement value $t_{ix}$, where x may be any node of the peer to peer network. Thus, the trust endorsement value is unidirectional, i.e., node i may validate node j, it is not mandatory or required that node j validate node i as a consequence of the validation of node i.

For example, if the nodes of the peer to peer network are nodes i, j, w, y or z, and node i comprises in its database $t_{ij}$ and $t_{iw}$, it is established that there is a direct endorsement connection between node i and nodes j and w, respectively. However, as there is no $t_{iz}$ in the database of node i, it is established that there is no direct endorsement connection between node i and nodes z.

Following the latter example, on the other hand, in case that there is a direct endorsement connection between node w and z (node w comprises $t_{wz}$ in its database), or node j and z (node j comprises $t_{jz}$ in its database), or both, it is established that node i has an indirect endorsement connection with node z, because an endorsement connection is established by a concatenation of a plurality of direct endorsement connections through at least one node.

In the event of being also established a direct endorsement connection between nodes w and z a part from between nodes w and z, the plurality of direct endorsement connections are the direct endorsement connection from node i to w and the direct endorsement connection from node w to z.

In the case of a direct endorsement connection between node j and z, the plurality of direct endorsement connections are the direct endorsement connection from node i to j and the direct endorsement connection from node j to z.

In the event that there is a direct endorsement connection between node w and z, and node j and z, the following direct endorsement connections are present:

- the direct endorsement connection from node i to w and the direct endorsement connection from node w to z, and,
- the direct endorsement connection from node i to j and the direct endorsement connection from node j to z.

Therefore, node i knows the existence of nodes j, w, y and z since they are connected in the peer to peer network due to the communication protocol used in this type of networks. Then, after obtaining at least one direct and/or indirect endorsement connection of node i, it is defined the endorsement network of node i. Preferably, it is used a breath-first search or a depth-first search.

Additionally, when a default trust endorsement value is set, a new default direct endorsement connection is created. A default direct endorsement connection is similar to a direct endorsement connection, but it is not based by the experience of between the nodes.

Further, the value of $\eta$ allows setting the minimum number to external validations of nodes without a direct or indirect endorsement connection required to influence the validation of the direct endorsement connection for a node connected through an indirect endorsement connection. Advantageously, this embodiment increases the accuracy of the method.

In this example, the endorsement network of node i is as follows:

- node i has a direct endorsement connection with nodes j and w.
- node i has an indirect endorsement connection with node z.
- Before setting the default trust endorsement value, node i does not have endorsement connection with node y, but node i knows from the existence of node y (node y identified as isolated from node i). After setting a default trust endorsement value between node i and y, $t_{iy}$, node i has default direct endorsement connection with node y. In the same way, if node y has a direct endorsement connection with node z, node i would have a default indirect endorsement connection with node z, due to the default direct endorsement connection with node y and the direct endorsement connection between nodes y and z.

In one embodiment, n_max is value between:

$$\left\lfloor 9 \cdot ln\left(\big||V| - |N_i|\big|\right)\right\rfloor \; and \; \left\lfloor 12 \cdot ln\left(\big||V| - |N_i|\big|\right)\right\rfloor$$

Where V is the number of all the nodes of the peer to peer network and Ni is number of nodes where node i has a direct endorsement connection. In the above example, V is 5 and Ni is 2, thus n_max is between

$$\left\lfloor 9 \cdot ln\left(\big||5| - |2|\big|\right)\right\rfloor = 10 \; and \; \left\lfloor 12 \cdot ln\left(\big||5| - |2|\big|\right)\right\rfloor = 13 \; .$$

In a particular embodiment, the step of locally validating at least one node comprises setting a threshold value and comparing said threshold value with the value of said at least one trust score s assigned by each node to every other node.

This embodiment allows defining to the user of the node its level of validation. For example, a node may decrease the threshold value of other node if the node uses the other node for low security operations, such as, watching videos and also said node may increase the threshold value of other node if the node uses the other node for high security operations, such as, bank transactions. Advantageously, this embodiment increases the versatility and the flexibility of the method.

In a second inventive aspect, the invention provides a data processing system comprising means for carrying out the steps of the method of any of the embodiments of the first inventive aspect.

In a third inventive aspect, the invention provides a computer program product comprising instructions which, when the program is executed by a computer, cause the computer to carry out the steps of the method of any of the embodiments of the first inventive aspect.

In a fourth inventive aspect, a computer-readable storage medium comprising instructions which, when executed by a computer, cause the computer to carry out the steps of the method of any of the embodiments of the first inventive aspect.

All the features described in this specification (including the claims, description and drawings) and/or all the steps of the described method can be combined in any combination, with the exception of combinations of such mutually exclusive features and/or steps.

## DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.

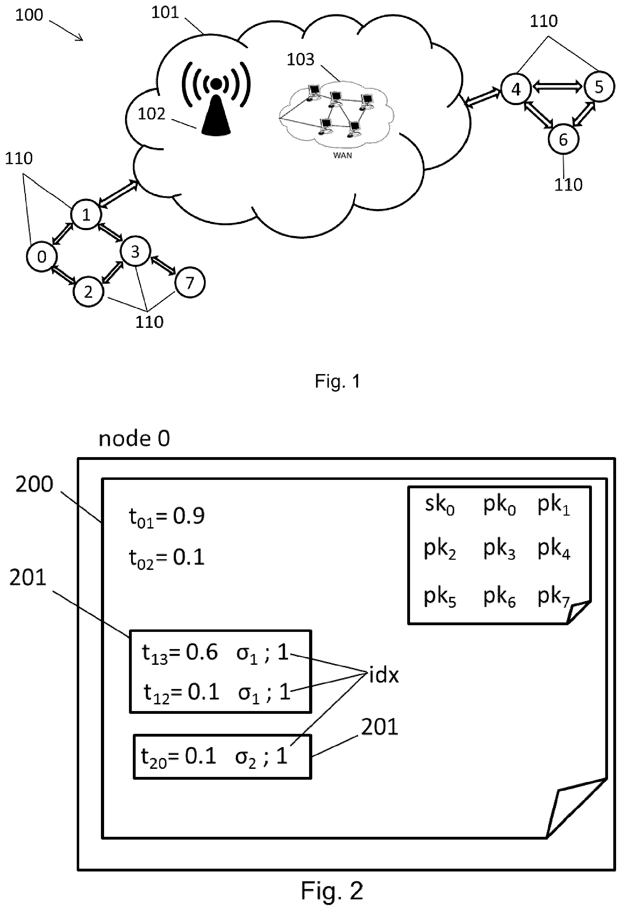

Figure 1          This figure shows an example of a peer to peer network used in the method of the invention.

| Figure 2 | This figure shows a database of a node of the peer to peer network used in the method of the invention. |
| --- | --- |
| Figures 3a-3c | These figures show the evolution of the database of at least one node during the execution of the gossip algorithm. |
| Figures 4a-4c | These figures show an example of the evolution of the endorsement network of a node according to the evolution gossip algorithm shown in figures 3a to 3c. |
| Figure 5a | This figure shows a change in the database of node 2. |
| Figure 5b | This figure shows the evolution of the database of node 0 due to the change shown in figure 5a. |
| Figure 5c | This figure shows an update in the endorsement network of node 0 due to the change shown in figure 5a. |

## DETAILED DESCRIPTION OF THE INVENTION

As it will be appreciated by one skilled in the art, aspects of the present invention may be embodied as a system, method or computer program product.

*Connection network wherein the peer to peer network is implemented.*

As it was indicated, the method of the invention defines two networks. The first type of network is the connection network wherein the peer to peer network is implemented. The second type of network, the endorsement network, will be explained below. The example of figure 1 shows an example of the connection network.

Figure 1 shows an example of a peer to peer network (100). The peer to peer network (100) of this example comprises eight nodes (110), nodes 0 to 7, and they are connected between them in a client server structure. In this example, any of said nodes (110) may act as a client or server.

In this section, it is explained an exemplified computer-implemented method of the present invention using the peer to peer network (100) of figure 1. In this example, steps b) to e) are performed in a concurrent manner in respect of step a). In other compatible examples, steps b) to e) may further be performed at the node's discretion. Thus, there is no need for waiting the finishing of step a) of the method.

Hereinafter, the connection network wherein the peer to peer network is implemented shall be understood as a physical network. In the particular example shown in figure 1, two physical interrelated networks are depicted.

As it is shown in figure 1, nodes 0 to 3 and 7 are physically located in a first physical network, and nodes 4 to 6 are physically located in a second physical network. The first and the second physical networks are connected through internet (101), particularly, though nodes 1 and 4. Connection between nodes (110) may be either wireless or wired. In this example, the connection through internet (101) comprises a wireless (102) and wired (103) connection. Preferably the wired connection (103) is performed through a wide area network (WAN).

According to this example, the neighbor nodes (110) of node 0 are the nodes (110) with a direct endorsement connection, *i.e.* nodes 1 and 2, whilst the neighbor nodes (110) of node 2 are nodes 0 and 3, and so on with the rest of the nodes (110) of the peer to peer network (100).

*Evolution of the database of the nodes during execution of the gossip algorithm.*

Figure 2 shows an example of the content of the database (200) of node 0 (110). In this example, node 0 (110) comprises a database (200) with a public and private node key pairs (pko, sko) of node 0 (110) and the public keys ($pk_1$, $pk_2$, $pk_3$, $pk_4$, $pk_5$, $pk_6$, $pk_7$) of the rest of the nodes (110) of the network (100). The public and private node key pairs are a public key, or *pk*, and a private key, or *sk*, related to each node (110).

In should be understood that the evolution of the database is achieved by the propagation of the variation of the trust endorsements over the nodes. The variation is propagated through the network in a gossip-based manner as a consequence of the gossip algorithm.

Additionally, a database (200) comprises at least one trust endorsement value t of the nodes (110) based on the experience of a node with said other nodes (110). Further, as the method of the invention implements a gossip algorithm to cover such cases when there is no said experience, the database (200) may also comprise a trust endorsement (201) accordingly.

Figure 2 shows the state of the database (200) of node 0 after implementing the first step of the gossip algorithm in the network of figure 1, or such database at a particular time step.

According to this example, node 0 has a previous experience with nodes 1 and 2. For that reason, node 0 has set a trust endorsement value t for each of these nodes 1 and 2. In particular the trust endorsement value of node 0 to node 1, or $t_{01}$, is 0.9 and the trust endorsement value of node 0 to node 2, or $t_{02}$, is 0.2. This means that node 0 sets that the signature of node 1 is more valid or authentic than the signature of node 2. In other words it can be said that, node 0 trust more in node 1 than in node 2, or node 0 validates a digital signature of node 1 with more confidence than node 2.

Additionally, due to the first step of the gossip algorithm, node 0 has received two endorsements messages (201) from node 1 and node 2. The endorsement message (201) from node 1 comprises:

- An index (idx) which indicates the version of its database, in this example the value is 1.

- The trust endorsement value of node 1 to node 2, or $t_{12}$, and trust endorsement value of node 1 to node 3, or $t_{13}$. In this example their values are 0.6 and 0.1 respectively.

- The endorsement signature of node 1, $\sigma_1$, generated with the private key $sk_1$ of node 1. Node 0 can use the public key of node 1, $pk_1$, in order to check if the $\sigma_1$ is valid.

Similarly, the endorsement message (201) from node 2 comprises:

- An index (idx), in this example the value is 1.

- The trust endorsement value of node 2 to node 0, or $t_{12}$, is equal to 0.1, and

- The endorsement signature of node 2, $\sigma_2$, generated with the private key $sk_2$ of node 2.

In this example each node (110) comprises public and private node key pairs and the public keys of the rest of the nodes (110) of the peer to peer network (100). The gossip algorithm comprises the steps of:

a.1 in each node (110), listening to the other nodes (110) of the network (100) and detecting at least one endorsement message (201) from said other nodes (110);

a.2 for each detected at least one endorsement message (201):

a.2.1 verifying the endorsement signature, $\sigma$, with the public key of said other node (110);

a.2.2 whether at least one trust endorsement value t of the endorsement message (210) already exists in the database (200) and the associated index (idx) of the endorsement message (210) is higher than the index (idx) of the database (200), updating the trust endorsement value t in the database (200),

whether trust endorsement value t is new, adding the detected trust endorsement (201) in the database (200),

a.3 increasing the index (idx) value associated to the updated trust endorsement value t by one and signing said the at least one trust endorsement value t and the increased index (idx) of the database (200) with the private key of the node (i) obtaining an endorsement message (201);

a.4 sharing the endorsement message (201) with each neighbour node (110).

Additionally, in this example wherein in step d) of sending further comprises:

- associating an index (idx) to the changed or new trust endorsement value t,
- signing the changed or new trust endorsement value t of the database (200) and the associated index (idx) with the private key of the node (110), obtaining an endorsement message (201) thereby;
- sharing the endorsement message (201) with each neighbour node (110).

The gossip algorithm is executed in the connection network (100). Figures 2a to 2c shows an example of the evolution of the content of database (200) comprised in the nodes (110). Hereinafter it is explained more specifically said figures.

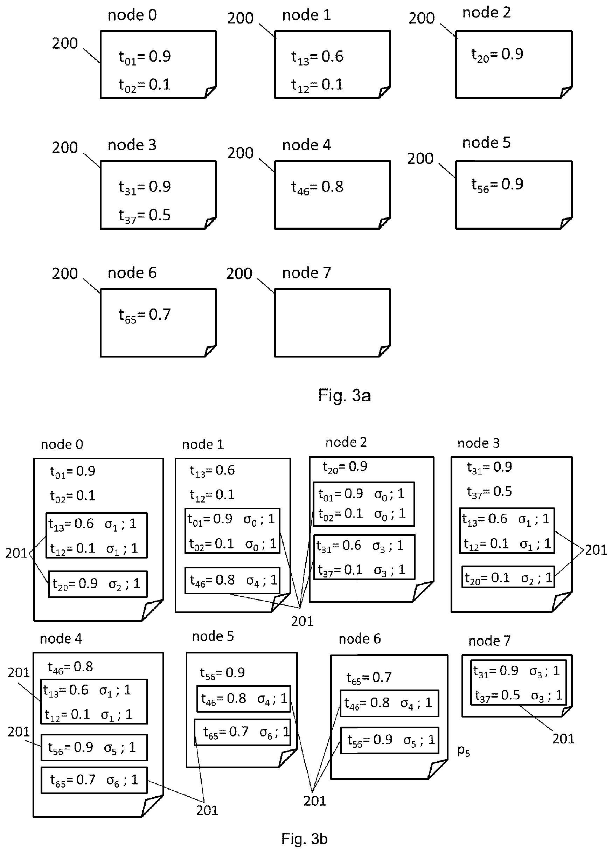

*Step a) of the method gossip algorithm: initial state (Figure 3a)*

Figure 3a shows the content of the database (200) of each node before applying the gossip algorithm. In this example, the database of each node (110) comprises the following values:

- Node 0: $t_{01}$= 0.9 and $t_{02}$= 0.1.

- Node 1: $t_{13}$= 0.6 and $t_{12}$= 0.1. As it can be appreciated, the trust endorsement values t, are not reciprocal, *i.e.* although node 0 has a trust endorsement value of node 1, $t_{01}$, it is not required that node 1 has a correspondent trust endorsement value of node 0. Additionally, a trust endorsement value does not require a direct physical connection, as it is shown in the case of trust endorsement value of node 1 to node 2, $t_{12}$.

- Node 2: $t_{20}$=0.9. As it can be appreciated, node 0 has set a low trust endorsement value to node 2 $t_{02}$, however node 2 has set a high trust endorsement value to node 0 $t_{20}$, therefore, the trust endorsement value t, is locally independent value for each node.

- Node 3: $t_{31}$= 0.9 and $t_{37}$= 0.5.

- Node 4: t46= 0.8.

- Node 5: t56= 0.9.

- Node 6: t65= 0.7.

- Node 7: nothing.

In this sense, a low trust endorsement value is understood as closer to 0 rather than 1, whilst a high trust endorsement value is understood as closer to 1 rather than 0.

*Gossip algorithm: first state (Figure 3b)*

Figure 3b shows the content of the database (200) of each node after applying the first iteration of the gossip algorithm. This state represents the situation of each database (200) when each node receives an endorsement message (201) from its direct neighbor nodes (110). For sake of simplicity, it is only commented the steps of the gossip algorithm performed in node 0 down below:

a.1 Node 0 (110), listens to the other nodes (110) of the network and detects endorsement messages (201) from said other nodes (110);

a.2 Node 0 (110) has detected two endorsement messages (201). Said endorsement messages (201) comprise:

- the endorsement signature of node 1 ($\sigma_1$) the trust endorsement values $t_{13}$ and $t_{12}$ of node 1, and the respective indexes (idx) and
- the endorsement signature of node 2 ($\sigma_2$) the trust endorsement value $t_{20}$ of node 2, and the respective index (idx).

a.2.1 Node 0 verifies each endorsement signature ($\sigma_1$, $\sigma_2$) with the public key, pk, of its database (200). After using all the public keys and asymmetric cryptographic algorithm, node 0 verifies that the endorsement messages (201) correctly and respectively belongs to nodes 1 and 2 because they were signed with private key of node 1 and 2, or $pk_1$ and $pk_2$, respectively. In the case of that an endorsement signature, $\sigma$, is not valid, the correspondent trust endorsement is deleted.

a.2.2 as the both the endorsement messages (201) corresponds to a new node (110), node 0 adds the trust endorsement values t's in the database (200).

a.3 increasing the index (idx) values associated to the updated trust endorsement values t's by one and signing said the at least one trust endorsement value t and the increased index (idx) of the database (200) with the private key of node 0 obtaining an endorsement message (201).
The initial index (idx) value is one, thus in this example, after updating the database by adding detected trust endorsements, the index (idx) has a value of two. Then, node 0 use its private key, $pk_0$, to create the endorsement signature, $\sigma_0$, of the endorsement message (201).

a.4 Finally, node 0 shares the endorsement message (201) with each neighbour node (110), in this case nodes 1 and 2.

Down below, it is shown the trust endorsements values, t, stored in each database of each node (110) at the end of this first state as it is shown in figure 3b:

- Node 0: $t_{01}= 0.9$, $t_{02}= 0.1$, $t_{13}= 0.6$, $t_{12}= 0.1$, and $t_{20}=0.9$.

- Node 1: $t_{13}= 0.6$, $t_{12}= 0.1$, $t_{01}= 0.9$, $t_{02}= 0.1$, $t_{46}= 0.8$, $t_{31}= 0.9$ and $t_{37}= 0.5$.

- Node 2: $t_{20}=0.9$, $t_{01}= 0.9$, $t_{02}= 0.1$, $t_{31}= 0.9$ and $t_{37}= 0.5$.

- Node 3: $t_{31}= 0.9$, $t_{37}= 0.5$, $t_{13}= 0.6$, $t_{12}= 0.1$ and $t_{20}=0.9$.

- Node 4: $t_{46}= 0.8$, $t_{13}= 0.6$, $t_{12}= 0.1$, $t_{56}= 0.9$ and $t_{65}= 0.7$.

- Node 5: $t_{56}$ 0.9, $t_{46}= 0.8$ and $t_{65}= 0.7$.

- Node 6: $t_{65}= 0.7$, $t_{46}= 0.8$ and $t_{56}= 0.9$.

- Node 7: $t_{31}= 0.9$ and $t_{37}= 0.5$.

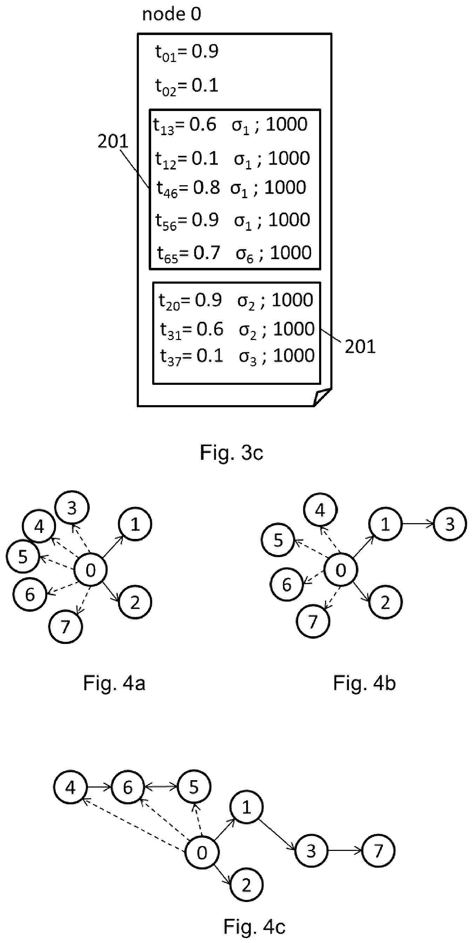

*Gossip algorithm: stable state of the database (Figure 3c)*

Figure 3c shows the content of the database (200) of node 0 after applying the gossip algorithm a large number of iterations, thus obtaining a stable state of the databases (200) of the nodes (110), *i.e.* consensus state. Figure 3c shows the iteration number 1000 thus the index value (idx) is 1000.
It should be noted that throughout this entire specification, timesteps and iterations will be understood as equivalent terms.
Down below, it is shown the trust endorsements values, t, stored in each database of each node (110) in the stable state:

- Node 0: $t_{01}= 0.9$, $t_{02}= 0.1$, $t_{13}= 0.6$, $t_{12}= 0.1$, $t_{20}=0.9$, $t_{31}= 0.9$, $t_{37}= 0.5$, $t_{46}= 0.8$, $t_{56}= 0.9$ and $t_{65}= 0.7$.
- Node 1: $t_{01}= 0.9$, $t_{02}= 0.1$, $t_{13}= 0.6$, $t_{12}= 0.1$, $t_{20}=0.9$, $t_{31}= 0.9$, $t_{37}= 0.5$, $t_{46}= 0.8$, $t_{56}= 0.9$ and $t_{65}= 0.7$.
- Node 2: $t_{01}= 0.9$, $t_{02}= 0.1$, $t_{13}= 0.6$, $t_{12}= 0.1$, $t_{20}=0.9$, $t_{31}= 0.9$, $t_{37}= 0.5$, $t_{46}= 0.8$, $t_{56}= 0.9$ and $t_{65}= 0.7$.
- Node 3: $t_{01}= 0.9$, $t_{02}= 0.1$, $t_{13}= 0.6$, $t_{12}= 0.1$, $t_{20}=0.9$, $t_{31}= 0.9$, $t_{37}= 0.5$, $t_{46}= 0.8$, $t_{56}= 0.9$ and $t_{65}= 0.7$.
- Node 4: $t_{01}= 0.9$, $t_{02}= 0.1$, $t_{13}= 0.6$, $t_{12}= 0.1$, $t_{20}=0.9$, $t_{31}= 0.9$, $t_{37}= 0.5$, $t_{46}= 0.8$, $t_{56}= 0.9$ and $t_{65}= 0.7$.
- Node 5: $t_{01}= 0.9$, $t_{02}= 0.1$, $t_{13}= 0.6$, $t_{12}= 0.1$, $t_{20}=0.9$, $t_{31}= 0.9$, $t_{37}= 0.5$, $t_{46}= 0.8$, $t_{56}= 0.9$ and $t_{65}= 0.7$.
- Node 6: $t_{01}= 0.9$, $t_{02}= 0.1$, $t_{13}= 0.6$, $t_{12}= 0.1$, $t_{20}=0.9$, $t_{31}= 0.9$, $t_{37}= 0.5$, $t_{46}= 0.8$, $t_{56}= 0.9$ and $t_{65}= 0.7$.
- Node 7: $t_{01}= 0.9$, $t_{02}= 0.1$, $t_{13}= 0.6$, $t_{12}= 0.1$, $t_{20}=0.9$, $t_{31}= 0.9$, $t_{37}= 0.5$, $t_{46}= 0.8$, $t_{56}= 0.9$ and $t_{65}= 0.7$.

Thus, in the stable state, all the database of the nodes (101) of the network (100) comprises the same trust endorsement values, t.

*Steps b) and c) of the method*

In this section it is described the local calculation and the local validation of node 0 in different states of its database (200), *i.e.* at different time steps of execution of the gossip algorithm. For nodes (110) 1 to 7 it is also performed likewise. In this example, the local validation performed by node 0 for each node (110) of its database (200) is based on the calculated trust score of node 0 to the rest of nodes. In order to increase the clarity the rest of the nodes (110) may be called nodes j, thus the trust score to be calculated is $s_{0j}$.
In particular, it is set a threshold value, *thrsh,* and it is compared with the value of said at least one trust score $s_{0j}$ assigned by each node to every other node and if $s_{0j}$ is higher than *thrsh,* the node is validated. In this example, *thrsh* is 0.5. Thus, it is obtained by node 0 a different validation of each digital signature of each node (110), i.e. nodes 1 to 7, of the peer to peer network (100).

In this example the local calculation is performed as follows:

- running a *breath-first search* in node 0 obtaining at least one direct and/or indirect endorsement connection of node 0, wherein an indirect endorsement connection between two nodes is stablished by a concatenation of a plurality of direct endorsement connections through at least one node,
- if there is a direct endorsement connection, setting the trust score $s_{0j}$ as

$$s_{0j} = t_{0j}$$

- if the endorsement connection between node i, where the step of locally calculating is been performed, and other node, for example node y, is different than a direct endorsement connection and an indirect endorsement connection: setting the trust endorsement value between said two nodes to a default trust endorsement value, $t_d$, preferably 0.4, i.e:

$$t_{0y} = t_d = 0.4$$

- if the endorsement connection between a node, where the step of locally calculating is been performed, and other node is different than a direct endorsement connection, iterating the following equation a number of iterations, *n_max,* for n form 0 to n_max:

$$s_{ik;n+1} = \alpha s_{ik;n} + (1 - \alpha) \frac{\sum_{j \epsilon V} t_{jk} s_{ij;n}^{\beta+1}}{\sum_{j \epsilon V} a_{jk} s_{ij;n}^{\beta+\Phi(s_{ik;n})} + \epsilon}$$

wherein

$\Phi(s_{ik;n})$ is calculated from the following expression:

$$\Phi(s_{ik;n}) = tanh\left(3 \cdot \eta^{-1} \cdot \sum_{j \epsilon V} a_{jk} s_{ij;n}^{\beta+1}\right)$$

wherein $\beta$ and $\eta$ equal to 4,
i is node (110) where the calculation is locally performed, in this example i corresponds to 0.
j is a node with direct endorsement connection with node k.
k is a node (110) with indirect endorsement connection with node i. $s_{ik;n}$ is the trust score given by node i to node k on iteration n, with $s_{ik,0}$ equal to 0.5.
V is set of nodes (110) of the peer to peer network (100).
$a_{jk}$ is 0 if there is not a direct endorsement connection from node j to node k.
$a_{kj}$ is 1 if there is a direct endorsement connection.
$\epsilon$ is preferably $10^{-8}$,
$\alpha$ is preferably 0.7.

- iterating the equation until the following condition is fulfilled,

$$\frac{\|s_{ik;n+1} - s_{ik;n}\|}{\|s_{ik;n}\|} < \delta$$

wherein $\delta$ is 0.005, and if the condition is fulfilled, then setting

$$s_{ik} = s_{ij;n+1}$$

and,

- if the iteration of the equation is the n-iteration, setting

$$s_{ik} = s_{ij;n}$$

In this example, n_max is value between:

$$\left\lfloor 9 \cdot ln\left(\left| |V| - |N_i| \right|\right) \right\rfloor \ and \ \left\lfloor 12 \cdot ln\left(\left| |V| - |N_i| \right|\right) \right\rfloor$$

Wherein $N_i$ is the number of nodes with a direct connection con node i.

*Performing steps b) and c) of the method in the initial state*

In this section, it is locally calculated and validated in node 0, the rest of nodes 1 to 7, in the initial state of the database (200) shown figure 3a of node 0 before applying the gossip algorithm.

In the initial state, the database (200) of node 0 is $t_{01}$= 0.9 and $t_{02}$= 0.1. This defines the endorsement network of node 0 which is shown in figure 4a. The endorsement network of node 0 in this initial state comprises two direct endorsement connections to nodes 1 and 2. Thus local calculation in node 0 is performed as follows:

$$s_{01} = t_{01} = 0.9$$

$$s_{02} = t_{02} = 0.1$$

As the rest of the nodes 3 to 7 there is not any endorsement connection, node 0 the trust endorsement value between node 0 and nodes 3 to 7 to a default trust endorsement value, $t_d$:

$$t_{03} = t_d = 0.4$$

$$t_{04} = t_d = 0.4$$

$$t_{05} = t_d = 0.4$$

$$t_{06} = t_d = 0.4$$

$$t_{07} = t_d = 0.4$$

In figure 4a, it can be appreciated in dashed arrows the default direct endorsement connections. Then, the above equation is iterated until n_max. n_max is value between:

$$\left\lfloor 9 \cdot ln\left(\left| |V| - |N_0| \right|\right) \right\rfloor \ and \ \left\lfloor 12 \cdot ln\left(\left| |V| - |N_0| \right|\right) \right\rfloor$$

thus,

$$\left\lfloor 9 \cdot ln\left(\left| |8| - |2| \right|\right) \right\rfloor = 16$$

$$\lfloor 12 \cdot ln(\vert\vert 8 \vert - \vert 2\vert\vert) \rfloor = 22$$

Therefore in this example, n_max is 20.

In this case there is not any direct or indirect endorsement connection between node 0 an 3. Thus, the trust score of node 0 to node 3 is calculated as follows:

$$s_{03;0} = 0.5$$

$$s_{03;1} = \alpha s_{03;0} + (1 - \alpha) \frac{\sum_{j \epsilon V} t_{jk} s_{ij;0}^{\beta+1}}{\sum_{j \epsilon V} a_{jk} s_{ij;0}^{\beta+\Phi(s_{03;1})} + \epsilon};$$

Regarding $\frac{\sum_{j \epsilon V} t_{jk} s_{ij;0}^{\beta+1}}{\sum_{j \epsilon V} a_{jk} s_{ij;0}^{\beta+\Phi(s_{ik;n})} + \epsilon}$

The numerator is:

$$t_{03} \cdot s_{00;0}^{\beta+1} + t_{13} \cdot s_{01;0}^{\beta+1} + t_{23} \cdot s_{02;0}^{\beta+1} + t_{33} \cdot s_{03;0}^{\beta+1} + t_{43} \cdot s_{04;0}^{\beta+1} + t_{53} \cdot s_{05;0}^{\beta+1} + t_{63;0} \cdot s_{06;0}^{\beta+1}$$
$$+ t_{73} \cdot s_{07;0}^{\beta+1}$$

And the denominator is:

$$a_{03} \cdot s_{00;0}^{\beta+\emptyset(s_{03;0})} + a_{13} \cdot s_{01;0}^{\beta+\emptyset(s_{03;0})} + a_{23} \cdot s_{02;0}^{\beta+\emptyset(s_{03;0})} + a_{33} \cdot s_{03;0}^{\beta+\emptyset(s_{03;0})} +$$
$$+ a_{43} \cdot s_{04;0}^{\beta+\emptyset(s_{03;0})} + a_{53} \cdot s_{05;0}^{\beta+\emptyset(s_{03;0})} + a_{63} \cdot s_{06;0}^{\beta+\emptyset(s_{03;0})} + a_{73} \cdot s_{07;0}^{\beta+\emptyset(s_{03;0})} + \epsilon$$

As:

- $t_{03}$ is 0.4, $t_{33}$ is 1, and $t_{13}$, $t_{23}$ and $t_{43}$ to $t_{63}$ are 0 and
- $a_{03}$ is 1, and the remainder values are 0

$\Phi(s_{03;0})$ is:

$$\Phi(s_{03;0}) = tanh\left(3 \cdot \eta^{-1} \cdot \sum_{j \epsilon V} a_{jk} s_{ij;0}^{\beta+1}\right) = 4 + tanh\left(3 \cdot 4^{-1} \cdot \left(s_{00;0}^{5}\right)\right) \cdot =$$
$$= tanh(0.75 \cdot (1)) = 0.635$$

And $\frac{\sum_{j \epsilon V} t_{jk} s_{ij;0}^{\beta+1}}{\sum_{j \epsilon V} a_{jk} s_{ij;0}^{\beta+\Phi(s_{ik;n})} + \epsilon}$ is calculated as follows:

$$\frac{0.4 \cdot s_{00;0}^{\beta+1} + 1 \cdot s_{03;0}^{\beta+1}}{s_{00;0}^{\beta} + \epsilon} = \frac{0.4 \cdot 1 + \cdot 0.5^{5}}{1 + 10^{-8}} \approx \frac{0.43}{1} = 0.43$$

Thus:

$$s_{03;1} = 0.7 \cdot 0.5 + 0.3 \cdot 0.43 = 0.48$$

In this embodiment $s_{ii}$ is equal to 1 because a node will always have the highest validation of itself. In this embodiment, as the database (200) is constant, the value is the same and therefore, $s_{03;20}$ is 0.48.

It can be appreciated that even if there is not a direct or an indirect connection with a node, the validations of others nodes with respect of said node are taking into account. Similarly applies with the rest of trust scores $s_{04}$ to $s_{07}$ which are equal to 0.48.

Then, node 0 locally validates each node (110) of the peer to peer network (100):

- Node 1: $s_{01}$ > thrd, is it 0.9 bigger than 0.5? Thus the digital signature of node 1 is valid for node 0.
- Node 2: $s_{02}$ > thrd, is it bigger than 0.1>0.5? Thus the digital signature of node 2 is invalid for node 0.
- Node 3: $s_{03}$ > thrd, is it bigger than 0.48>0.5? Thus the digital signature of node 3 is invalid for node 0.

Similarly applies with the rest of trust scores $s_{04}$ to $s_{07}$.

*Performing steps b) and c) of the method in the first state*

In this section, it is shown the local calculation and validation of the digital signatures of nodes 1 to 7 by node 0. In particular, it is shown the local calculation and validation in the first state of the database (200) of node 0 of the gossip algorithm. The first state of the database of node 0 is shown in figure 3b. As it is analyzed a specific state the database (200) is constant and it will be not changes during the iterations.

Figure 4b shows the endorsement network defined by the first state of the database (200) of node 0 of figure 3b. It can be appreciated that node 0 has two direct endorsement connections with nodes 1 and 2, because of there are the trust endorsement values $t_{01}$ and $t_{02}$.

Additionally, there is a concatenation of a plurality of direct endorsement connections through at least one node. In particular, there are two direct endorsement connections through node 1:

- from node 0 to node 1 and
- from node 1 to node 3

Therefore, node 0 has an indirect endorsement connection with node 3. With nodes 4 to 7 there is not any endorsement connection. Thus local calculation in node 0 at the first stage is performed as follows:

- Database (200) of node 0: Node 0: $t_{01}$= 0.9, $t_{02}$= 0.1, $t_{13}$= 0.6, $t_{12}$= 0.1, and $t_{20}$=0.9.

- Direct endorsement connections, nodes 1 and 2:

$$s_{01} = t_{01} = 0.9$$

$$s_{02} = t_{02} = 0.1$$

- As the rest of the nodes 4 to 7 there is not any endorsement connection, node 0 the trust endorsement value between node 0 and nodes 4 to 7 to a default trust endorsement value, $t_d$:

$$t_{04} = t_d = 0.4$$

$$t_{05} = t_d = 0.4$$

$$t_{06} = t_d = 0.4$$

$$t_{07} = t_d = 0.4$$

In figure 4b, it can be appreciated in dashed arrows the default direct endorsement connections. In this case there is an indirect endorsement connection between node 0 an 3. Thus, as it is commented in the previous section, then, the above equation is iterated until n is 20:

$$s_{03;0} = 0.5$$

$$s_{03;1} = \alpha s_{03;0} + (1 - \alpha) \frac{\sum_{j \epsilon V} t_{jk} s_{ij;0}^{\beta+1}}{\sum_{j \epsilon V} a_{jk} s_{ij;0}^{\beta+\Phi(s_{03;0})} + \epsilon}$$

As:

- $t_{13}$ is 0.6 $t_{33}$ is 1, and $t_{13}$, $t_{23}$ and $t_{43}$ to $t_{63}$ are 0 and
- $a_{13}$ is 1, and the remainder values are 0,

$\Phi$ ($s_{03;0}$) is

$$\Phi(s_{03;0}) = tanh\left(3 \cdot \eta^{-1} \cdot \sum_{j \epsilon V} a_{jk} s_{ij;0}^{\beta+1}\right)$$

$$= tanh\left(3 \cdot 4^{-1} \cdot \left(s_{01;0}^{5}\right)\right) =$$

$$= tanh\left(0.75 \cdot (0.9^{5})\right) = 0.416$$

And $\frac{\sum_{j \epsilon V} t_{jk} s_{ij;0}^{\beta+1}}{\sum_{j \epsilon V} a_{jk} s_{ij;0}^{\beta+\Phi(s_{ik;n})} + \epsilon}$ is calculated as follows:

$$\frac{0.6 \cdot 0.9^5 + 1 \cdot 0.5^5}{0.9^{4.416} + 10^{-8}} = \frac{0.79}{0.63} = 1.25$$

Thus:

$$s_{03;1} = 0.7 \cdot 0.5 + 0.3 * 1.25 = 0.73$$

In this embodiment as the database (200) is constant, the value is the same and therefore, $s_{03;20}$ is 0.73. As the endorsement network of node 0 with respect to nodes 4 to 7 is similar to the endorsement network of figure 4a, trust scores $s_{04}$ to $s_{07}$ which are equal to 0.48 as it is indicated in the previous section.

Then, node 0 locally validates each node (110) of the peer to peer network (100):

- Node 1: $s_{01}$ > thrd, is it 0.9 bigger than 0.5? Thus the digital signature of node 1 is valid for node 0.
- Node 2: $s_{02}$ > thrd, is it bigger than 0.1>0.5? Thus the digital signature of node 2 is invalid for node 0.
- Node 3: $s_{03}$ > thrd, is it bigger than 0.73>0.5? Thus the digital signature of node 3 is valid for node 0.

Similarly applies with the rest of trust scores $s_{04}$ to $s_{07}$.

*Performing steps b) and c) of the method in the stable state*

In this section it is shown the local calculation and validation of the digital signatures of nodes 1 to 7 by node 0 in the stable state of the database (200) of node 0 after applying the gossip algorithm. The stable state of the database of node 0 is shown in figure 3c. As it is analyzed a specific state the database is constant and it will be not changes during the iterations.

Figure 4c shows the endorsement network defined by the stable state of the database of node 0 of figure 3b. It can be appreciated that node 0 has two direct endorsement connections with nodes 1 and 2, because of there are the trust endorsement values $t_{01}$ and $t_{02}$.Additionally, it can be appreciated a bidirectional line between nodes 4 and 5 because due to the values of $t_{45}$ and t54.

Additionally, there are two indirect endorsement connections with nodes 3 and 7:

- Indirect endorsement connection with node 3: a concatenation of a plurality of direct endorsement connections through one node, i.e., through node 1: from node 0 to node 1 and from node 1 to node 3.

- Indirect endorsement connection with node 7: a concatenation of a plurality of direct endorsement connections through two nodes i.e., through nodes 1 and 3: from node 0 to node 1, from node 1 to node 3 and from node 3 to node 7.

- Database (200) of node 0 Node 0: $t_{01}$= 0.9, $t_{02}$= 0.1, $t_{13}$= 0.6, $t_{12}$= 0.1, t2o=0.9, $t_{31}$= 0.9, $t_{37}$= 0.5, $t_{46}$= 0.8, $t_{56}$= 0.9 and $t_{65}$= 0.7.

- Direct endorsement connections, nodes 1 and 2:

$$s_{01} = t_{01} = 0.9$$

$$s_{02} = t_{02} = 0.1$$

- As the rest of the nodes 4 to 7 there is not any endorsement connection, node 0 the trust endorsement value between node 0 and nodes 4 to 7 to a default trust endorsement value, $t_d$:

$$t_{04} = t_d = 0.4$$

$$t_{05} = t_d = 0.4$$

$$t_{06} = t_d = 0.4$$

$$t_{07} = t_d = 0.4$$

In figure 4c, it can be appreciated in dashed arrows the default direct endorsement connections. In this case the indirect endorsement connection between node 0 and 3 is similar than the shown in the previous section. Thus, as it is commented above, then, the above equation is iterated until n is 20.

As:

- $t_{03}$ is 0.4, $t_{13}$ is 0.6 $t_{33}$ is 1, and $t_{13}$, $t_{23}$ and $t_{43}$ to $t_{63}$ are 0 and
- $a_{03}$ and $a_{13}$ are 1, and the remainder values are 0,

Thus, it is similar to the first state of the algorithm, the result of the calculation of $\Phi$ ($s_{03;0}$) and $\dfrac{\sum_{j \epsilon V} t_{jk} s_{ij;0}^{\beta+1}}{\sum_{j \epsilon V} a_{jk} s_{ij;0}^{\beta} + \epsilon}$ is the same that in the above step. Thus $\Phi$ ($s_{03;0}$) is 0.416 and $s_{03;0}$ is 0.73.

In this embodiment, as the database (200) is constant, the value is the same and therefore, $s_{03;20}$ is 0.73. Similarly, the method is applied with the rest of trust scores $s_{04}$ to $s_{07}$. Then, the node 0 locally validates each node (110) of the peer to peer network (100) as it is indicated in the previous section.

*Performing steps a) to e) of the method concurrently*

As it is indicated, steps b) to e) can be performed in a concurrent manner in respect of step a). In other compatible examples, steps b) to e) may further be performed at the node's discretion. Thus, there is no need for waiting the finishing of step a) of the method. In this section, it is shown an example of said concurrent operation.

In this example, it is used the peer to peer network (100) of figure 1 and initial conditions of figure 3a. Thus, the database (200) of node 0 is $t_{01}$= 0.9, $t_{02}$= 0.1, $t_{13}$= 0.6, $t_{12}$= 0.1, and $t_{20}$=0.9.

In the first stage of the gossip algorithm, the endorsement network of node is shown in figure 4b and the trust scores, s, of node 0 are obtained as it is above indicated in the example of figure 4b: $s_{01}$ = 0.9, $s_{02}$ = 0.1, $s_{03;1}$ = 0.7, $s_{04}$ = 0.5, $s_{05}$ = 0.5, $s_{06}$ = 0.5, $s_{07}$ = 0.5.

For indirect endorsement connection of node 0 to node 3, it is shown the first iteration of the calculation, $s_{03;0}$.

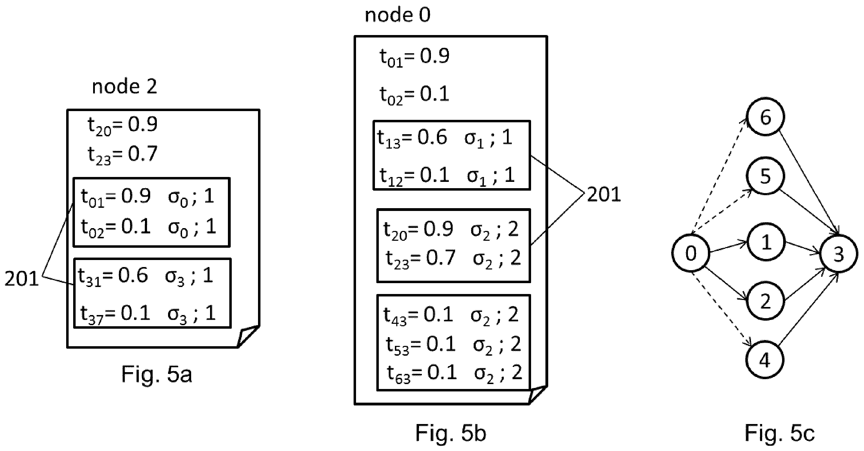

Concurrently, due to its experience with node 3, node 2 sets a new trust endorsement value with respect to node 3, $t_{23}$ = 0.7, and nodes 4 to 6 sets a new trust endorsement value with respect to node 3 $t_{43}$ = $t_{53}$ = $t_{63}$ = 0.1. Figure 5a shows the updated version of the database (200) of node 2. The step d) of the method is executed and node 2 sends the changed trust endorsement value t to each neighbor node (110) and the gossip algorithm is executed in the plurality of nodes (110), i.e., step a) of the method is performed again.

In this example, node 2 sends the following endorsement message (201) to their neighbor nodes 0 and 3:

- $t_{20}$= 0.1 $\sigma_2$; index = 2.
- $t_{23}$= 0.7 $\sigma_2$; index = 2.
- $t_{01}$= 0.9 $\sigma_2$; index = 2
- $t_{02}$= 0.1 $\sigma_2$; index = 2
- $t_{31}$= 0.6 $\sigma_2$; index = 2
- $t_{37}$= 0.1 $\sigma_2$; index = 2

Node 0 detects the new trust endorsement (201) from node 2 and executes steps a.2 to a.4 of the gossip algorithm for updating its database (200). During the gossip algorithm, node 0 discards the trust endorsement values wherein the origin of the trust is node 0, i.e., $t_{01}$, $t_{02}$. Similarly, node 4 sends a similar endorsement message (201) indicating the new trust endorsements values from nodes 4 to 6. Thus, the database (200) of node 0 and its endorsement network is updated as it is shown in figures 5b and 5c respectively.

Then, node 0 has a two indirect endorsement connection with node 3, one through node 1 and other through node 2. Thus, the second iteration of the locally calculation of the trust score $s_{03}$ is performed as follows:

- Database (200) of node 0: Node 0: $t_{01}$= 0.9, $t_{02}$= 0.1, $t_{13}$= 0.6, $t_{12}$= 0.1, $t_{20}$= 0.9, $t_{23}$=0.7 and $t_{43}$ = $t_{53}$ = $t_{63}$ = 0.1.

- Direct endorsement connections, nodes 1 and 2:

$$s_{01;1} = t_{01} = 0.9$$

$$s_{02;1} = t_{02} = 0.1$$

- As the rest of the nodes 4 to 7 there is not any endorsement connection, node 0 the trust endorsement value between node 0 and nodes 4 to 7 to a default trust endorsement value, $t_d$:

$$t_{04} = t_d = 0.4$$

$$t_{05} = t_d = 0.4$$

$$t_{06} = t_d = 0.4$$

$$t_{07} = t_d = 0.4$$

- Trust scores calculated in the first iteration:

$$S_{03;1} = S_{04;1} = S_{05;1} = S_{06;1} = S_{07;1} = 0.48.$$

Thus, as it can be appreciated in figure 5c there are three default endorsements connections between nodes 0 to 3, through nodes 4 to 6. As there is between node 0 and 3 an endorsement connection different than a direct endorsement connection, the second iteration of the locally calculation of the trust score $s_{03}$ is performed as follows:

$$s_{03;2} = \alpha s_{03;1} + (1 - \alpha) \frac{\sum_{j \epsilon V} t_{jk} s_{ij;1}^{\beta+1}}{\sum_{j \epsilon V} a_{jk} s_{ij;1}^{\beta+\Phi(s_{03;1})} + \epsilon}$$

As:

- $t_{13}$ is 0.6, $t_{23}$ is 0.7, $t_{33}$ is 1, $t_{43}$, $t_{53}$, $t_{63}$ are 0.1 and $t_{03}$ is 0,
- $a_{13}$, $a_{23}$, $a_{43}$, $a_{53}$ and $a_{63}$ are 1 and the remainder values are 0,
- $S_{03;1} = s_{04;1} = s_{05;1} = s_{06;1} = S_{07;1} = 0.48$

$\Phi$ ($S_{03;1}$) is

$$\Phi(s_{03;1}) = tanh\left( 3 \cdot \eta^{-1} \cdot \sum_{j \epsilon V} a_{jk} s_{ij;1}^{\beta+1} \right)$$

$$= tanh\left(3 \cdot 4^{-1} \cdot \left(s_{01;1}^5 + s_{02;1}^5 + s_{04;1}^5 + s_{04;1}^5 + s_{04;1}^5\right)\right) =$$

$$= tanh\left(0.75 \cdot \left(0.9^5 + 0.1^5 + 0.48^5 + 0.48^5 + 0.48^5\right)\right) =$$

$$tanh(0.75 \cdot 0.66) = 0.462$$

And $\frac{\sum_{j \epsilon V} t_{jk} s_{ij;0}^{\beta+1}}{\sum_{j \epsilon V} a_{jk} s_{ij;0}^{\beta+\Phi(s_{ik;n})} + \epsilon}$ is calculated as follows:

The numerator is:

$$t_{13} \cdot s_{01;1}^{\beta+1} + t_{23} \cdot s_{02;1}^{\beta+1} + t_{33} \cdot s_{03;1}^{\beta+1} + t_{43} \cdot s_{04;0}^{\beta+1} + t_{53} \cdot s_{05;0}^{\beta+1} + t_{63;0} \cdot s_{06;0}^{\beta+1} =$$

And the denominator is:

$$a_{13} \cdot s_{01;1}^{\beta+\emptyset(s_{03;1})} + a_{23} \cdot s_{02;1}^{\beta+\emptyset(s_{03;1})} + a_{33} \cdot s_{03;1}^{\beta+\emptyset(s_{03;1})} +$$

$$+ a_{43} \cdot s_{04;0}^{\beta+\emptyset(s_{03;0})} + a_{53} \cdot s_{05;0}^{\beta+\emptyset(s_{03;0})} + a_{63} \cdot s_{06;0}^{\beta+\emptyset(s_{03;0})} + \epsilon$$

$$\frac{0.6 \cdot 0.9^5 + 0.7 \cdot 0.1^5 + 1 \cdot 0.47^5 + 0.1 \cdot 0.47^5 + 0.1 \cdot 0.47^5 + 0.1 \cdot 0.47^5}{0.9^{4.462} + 0.1^{4.462} + 0.48^{4.462} + 0.48^{4.462} + 0.48^{4.462} + 10^{-8}} =$$

$$= \frac{0.38}{0.73} = 0.52$$

Thus:

$$s_{03;2} = 0.7 \cdot 0.48 + 0.3 * 0.52 = 0.49$$

It can be appreciated that the low validation values of nodes 4 to 6 with respect to node 3 has been influenced in the calculation even with high validation value of node 1 with respect of node 4.
Then, it is checked the following condition:

$$\frac{\left\|s_{ik;n+1} - s_{ik;n}\right\|}{\left\|s_{ik;n}\right\|} < \delta$$

$$\frac{\left\|s_{03;2} - s_{03;1}\right\|}{\left\|s_{03;1}\right\|} < 0.005$$

$$\frac{\left\|0.49 - 0.48\right\|}{\left\|0.48\right\|} = 0.021 < 0.005$$

As the condition is not fulfilled, node 0 will iterate until the iteration number 20 taking in to account any other variation of the database (200), and locally validating each node (110) of the peer to peer network (100).

## Claims

1.  A computer-implemented method for validating a digital signature of at least one node (110) in a peer to peer network (100), wherein said network (100) comprises at least three nodes (110), for example nodes i, j and w,

    wherein each node (110) is configured to store a database (200) and at least one trust score s, for example a trust score $s_{ij}$ or $s_{iw}$ of a node (110) i in respect with another node (110) j or w,
    wherein each database (200) is configured to store at least one trust endorsement value t of a node (110) in respect with another node (110) defining a direct endorsement connection between said nodes (110), for example a trust endorsement value $t_{ij}$ of a node (110) i in respect with another node (110) j defining a direct endorsement connection between nodes (110) i and j,
    wherein the trust endorsement value t is greater or equal than 0 and less or equal than 1, and
    the computer-implemented method comprising the steps of,

    a) executing in the plurality of nodes (110) a gossip algorithm, receiving in each node at least one endorsement message (201) and obtaining in each node (110) an updated version of its database (200), wherein the updated database (200) in each node (110) comprises the trust endorsement values t's of at least one different node (110) of the peer to peer network (100); for example, the updated database (200) of the node (100) i comprises at least the trust endorsement value $t_{jw}$ of the node (100) j in respect with the node (110) w;
    b) locally calculating in each node (110) a trust score s assigned to other node (110) of the network (100), for each node (110) of its database (200), based on the data contained in said database (200); for example, the node (110) i calculates the trust scores $s_{ij}$ and $s_{iw}$ assigned to the nodes (100) j and w; and
    c) locally validating each digital signature received in each node (110), wherein each digital signature is issued by the at least one node (110) of its database (200), based on the value of said trust score (s) of the peer to peer network (100), obtaining in each node (110) a different validation of each digital signature issued by each node (110) of the network (100); for example, if the trust score of a node i with respect to a node j, $s_{ij}$, satisfies a certain condition, then the digital signatures issued by node j and received by node i will be validated, and
    d) if there is a change in at least one trust endorsement value t of a database (200) of a node (110) or a at least one new trust endorsement value t, sending the changed or new trust endorsement value t to each neighbour node (110) and executing step a), and
    e) if a node (110) is deleted or a new node (110) is added in the peer to peer network (100), executing step a).

2. The computer-implemented method according to claim 1, wherein steps b) to e) are performed in a concurrent manner in respect of step a).

3. The computer-implemented method according to any of the previous claims, wherein each node (110) comprises at least one public and private node key pairs and the public keys of the rest of the nodes (110) of the peer to peer network (100), wherein the public and private node key pairs are a public key and a private key related to each node (110),

   wherein the at least one endorsement message (201) comprises at least one trust endorsement value t, an index value (idx) associated to each trust endorsement value t and endorsement signature ($\sigma_1$, $\sigma_2$); and
   wherein said endorsement signature ($\sigma_1$, $\sigma_2$) is signed with the private key of the node which sent the at least one endorsement message (201), and
   wherein, the gossip algorithm of step a) comprising the steps of:

   a.1 in each node (110), listening to the other nodes (110) of the network (100) and detecting at least one endorsement message (201) from said other nodes (110); and
   a.2 for each detected endorsement message (201):

   a.2.1 verifying the endorsement signature ($\sigma_1$, $\sigma_2$) with the public key of said other node (110);
   a.2.2 whether at least one trust endorsement value t of the endorsement message (210) already exists in the database (200) and the associated index (idx) of the endorsement message (210) is higher than the index (idx) of the database (200), updating the trust endorsement value t in the database (200),

   a.3 increasing the index (idx) value associated to the updated trust endorsement value t by one and signing said the at least one trust endorsement value t and the increased index (idx) of the database (200) with the private key of the node (110) obtaining an endorsement message (201);
   a.4 sharing the endorsement message (201) with each neighbour node (110).

4. The computer-implemented method according to claim 3, wherein between steps a.2.2 and a.3, the gossip algorithm of step a) further comprises:
   whether the at least one trust endorsement value t is new, adding the detected trust endorsement (201) in the database (200).

5. The computer-implemented method according to any of the claims 3 or 4, wherein in step d) of sending further comprises:

   - associating an index (idx) to the changed or new trust endorsement value t,
   - signing the changed or new trust endorsement value t of the database (200) and the associated index (idx) with the private key of the node (110), obtaining an endorsement message (201) thereby;
   - sharing the endorsement message (201) with each neighbour node (110).

6. The computer-implemented method according to any of the previous claims, wherein said step of locally calculating in each node (110), at least one trust score s assigned to other node (110) of the network (100) based on the data contained in its own database (200), comprises

   - locally obtaining at least one direct and/or indirect endorsement connection of a node (110), wherein an indirect endorsement connection between two nodes (110) is stablished by a concatenation of a plurality of direct endorsement connections through at least one node (110),
   - if there is a direct endorsement connection, setting the trust score s as

$$s = t.$$

7. The computer-implemented method according to claim 6, wherein the step of locally obtaining at least one direct and/or indirect endorsement connection of a node (110) is performed by running a breath-first search or a depth-first search by said node (110).

8. The computer-implemented method according to any of the claims 6 or 7, wherein if the endorsement connection between the node (110), where the step of locally calculating is been performed, and other node (110) is different than a direct endorsement connection and an indirect endorsement connection, the step of locally calculating in each node (110) at least one trust score s further comprises

  - setting the trust endorsement value t between said two nodes to a default trust endorsement value, $t_d$, preferably $t_d$ is 0.4, and

wherein if the endorsement connection between a node, where the step of locally calculating is been performed, and other node is different than a direct endorsement connection the step of locally calculating in each node (110) at least one trust score s further comprises iterating the following equation a number of iterations, n_max, for n form 0 to n_max:

$$s_{ik;n+1} = \alpha s_{ik;n} + (1 - \alpha) \frac{\sum_{j \epsilon V} t_{jk} s_{ij;n}^{\beta+1}}{\sum_{j \epsilon V} a_{jk} s_{ij;n}^{\beta+\Phi(s_{ik;n})} + \epsilon}$$

wherein
wherein $\Phi(s_{ik;n})$ is a function between 0 and 1, monotonously increasing function based on:

$$\sum_{j \epsilon V} a_{jk} s_{ij;n}^{\beta+1}$$

wherein the limit of $\Phi(s_{ik;n})$ tends to 1 when $\sum_{j \epsilon V} a_{jk} s_{ij;n}^{\beta+1}$ tends to infinite, and the function $\Phi(s_{ik;n})$ is 0 when

$\sum_{j \epsilon V} a_{jk} s_{ij;n}^{\beta+1}$ is 0,

  wherein $\beta$ is integer numbers, being $\beta$ preferably a number between 1 and 6,
  i is the node (110) where the calculation is locally performed,
  j is a node with direct endorsement connection with node k
  k is a node (110) with indirect endorsement connection with node (110) i,
  $s_{ik;n}$ is the trust score given by node (110) i to node (110) k on iteration n, with $s_{ik,0}$ equal to 0.5,
  V is set of nodes (110) of the peer to peer network (100),
  $a_{jk}$ is 0 if there is not a direct endorsement connection from node (110) j to node (110) k,
  $a_{kj}$ is 1 if there is a direct endorsement connection,
  $\alpha$ is a positive real number, and
  $\epsilon$ is a positive number, preferably ten to minus eight.

9. The computer-implemented method according to the previous claim, wherein $\Phi(s_{ik;n})$ is calculated from the following expression:

$$\Phi(s_{ik;n}) = tanh\left(3 \cdot \eta^{-1} \cdot \sum_{j \epsilon V} a_{jk} s_{ij;n}^{\beta+1}\right)$$

  wherein $\eta$ is an integer number.

10. The computer-implemented method according to any of the claims 8 or 9, wherein
  if the iteration of the equation is the n-iteration, setting

23

$$s_{ik} = s_{ij;n}$$

and/or
iterating the equation until the following condition is fulfilled,

$$\frac{\left\|s_{ik;n+1} - s_{ik;n}\right\|}{\left\|s_{ik;n}\right\|} < \delta$$

wherein $\delta$ is a positive real number, preferably 0.005, and setting

$$s_{ik} = s_{ij;n+1}.$$

11. The computer-implemented method according to any of the previous claims, wherein locally validating at least one node (110) comprises setting a threshold value and comparing said threshold value with the value of said at least one trust score s assigned by each node (110) to every other node (110).

12. A data processing system comprising means for carrying out the steps of the method of any of claims 1 to 11.

13. A computer program product comprising instructions which, when the program is executed by at least three computers, cause the computers to carry out the steps of the method of any of the claims 1 to 11.

14. A computer-readable storage medium comprising instructions which, when executed by at least three computers, cause the computers to carry out the steps of the method of any of the claims 1 to 11.


**Patentansprüche**

1. Computer-implementiertes Verfahren zum Validieren einer digitalen Signatur von mindestens einem Knoten (110) in einem Peer-to-Peer-Netzwerk (100), wobei das Netzwerk (100) mindestens drei Knoten (110) aufweist, zum Beispiel die Knoten i, j und w,

wobei jeder Knoten (110) konfiguriert ist, eine Datenbank (200) und mindestens einen Vertrauens-Score s zu speichern, zum Beispiel einen Vertrauens-Score $S_{ij}$ oder $S_{iw}$ eines Knotens (110) i in Bezug auf einen anderen Knoten (110) j oder w,
wobei jede Datenbank (200) konfiguriert ist, mindestens einen Vertrauens-Endorsement-Wert t eines Knotens (110) in Bezug auf einen anderen Knoten (110) zu speichern, der eine direkte Endorsement-Verbindung zwischen den besagten Knoten (110) definiert, zum Beispiel einen Vertrauens-Endorsement-Wert $t_{ij}$ eines Knotens (110) i in Bezug auf einen anderen Knoten (110) j, der eine direkte Endorsement-Verbindung zwischen den Knoten (110) i und j definiert,
wobei der Vertrauens-Endorsement-Wert größer oder gleich 0 und kleiner oder gleich 1 ist, und
wobei das Computer-implementierte Verfahren die folgenden Schritte aufweist:

a) ein Ausführen eines Gossip-Algorithmus in der Vielzahl von Knoten (110), ein Empfangen mindestens einer Endorsement-Nachricht (201) in jedem Knoten und ein Erhalten einer aktualisierten Version seiner Datenbank (200) in jedem Knoten (110), wobei die aktualisierte Datenbank (200) in jedem Knoten (110) die Vertrauens-Endorsement-Werte t's mindestens eines anderen Knotens (110) des Peer-to-Peer-Netzwerks (100) aufweist; zum Beispiel weist die aktualisierte Datenbank (200) des Knotens (100) i zumindest den Vertrauens-Endorsement-Wert $t_{jw}$ des Knotens (100) j in Bezug auf den Knoten (110) w auf;
b) ein lokales Berechnen in jedem Knoten (110) eines Vertrauens-Scores s, der einem anderen Knoten (110) des Netzwerks (100) zugewiesen ist, für jeden Knoten (110) in seiner Datenbank (200), basierend auf den Daten, die in der Datenbank (200) enthalten sind; zum Beispiel berechnet der Knoten (110) i die Vertrauens-Scores $s_{ij}$ und $s_{iw}$, die den Knoaten (100) j und w zugewiesen sind; und
c) ein lokales Validieren einer jeden in jedem Knoten (110) empfangenen digitalen Signatur, wobei jede digitale Signatur von dem mindestens einen Knoten (110) seiner Datenbank (200) ausgestellt wird, basierend auf dem Wert des Vertrauens-Score (s) des Peer-to-Peer-Netzwerks (100), ein Erhalten in jedem Knoten (110) einer anderen Validierung einer jeden digitalen Signatur, die von jedem Knoten (110) des Netzes (100) ausgestellt wurde; zum Beispiel, wenn der Vertrauens-Score eines Knotens i in Bezug auf einen Knoten j, $s_{ij}$, eine bestimmte Bedingung erfüllt, werden die digitalen Signaturen, die vom Knoten j ausgestellt wurden und vom Knoten i empfangen wurden, validiert, und

d) wenn es eine Änderung mindestens eines Vertrauens-Endorsement-Werts t einer Datenbank (200) eines Knotens (110) oder mindestens eines neuen Vertrauens-Endorsement-Werts t gibt, ein Senden des geänderten oder des neuen Vertrauens-Endorsement-Werts t an jeden Nachbarknoten (110) und ein Ausführen des Schritts a), und

e) wenn ein Knoten (110) gelöscht oder ein neuer Knoten (110) in dem Peer-to-Peer-Netzwerk (100) hinzugefügt wird, ein Ausführen des Schritts a).

2. Computer-implementiertes Verfahren nach Anspruch 1, wobei die Schritte b) bis e) in Bezug auf den Schritt a) gleichzeitig ausgeführt werden.

3. Computer-implementiertes Verfahren nach einem der vorstehenden Ansprüche, wobei jeder Knoten (110) mindestens ein öffentliches und ein privates Knotenschlüsselpaar und die öffentlichen Schlüssel der übrigen Knoten (110) des Peer-to-Peer-Netzwerks (100) aufweist, wobei die öffentlichen und privaten Knotenschlüsselpaare ein öffentlicher Schlüssel und ein privater Schlüssel für jeden Knoten (110) sind,

wobei die mindestens eine Endorsement-Nachricht (201) mindestens einen Vertrauens-Endorsement-Wert t, einen Indexwert (idx), der jedem Vertrauens-Endorsement-Wert t zugeordnet ist, und eine Endorsement-Signatur ($\sigma$1, $\sigma$2) aufweist; und

wobei die Endorsement-Signatur ($\sigma$1, $\sigma$2) mit dem privaten Schlüssel des Knotens signiert ist, den die mindestens eine Endorsement-Nachricht (201) gesendet hat, und

wobei der Gossip-Algorithmus des Schritts a) die folgenden Schritte aufweist:

a.1 in jedem Knoten (110), ein Abhören der anderen Knoten (110) des Netzwerks (100) und ein Detektieren mindestens einer Endorsement-Nachricht (201) von den anderen Knoten (110); und

a.2 für jede detektierte Endorsement-Nachricht (201):

a.2.1 ein Verifizieren der Endorsement-Signatur ($\sigma$1, $\sigma$2) mit dem öffentlichen Schlüssel des anderen Knotens (110);

a.2.2 ob mindestens ein Vertrauens-Endorsement-Wert t der Endorsement-Nachricht (210) in der Datenbank (200) bereits vorhanden ist und der zugeordnete Index (idx) der Endorsement-Nachricht (210) höher als der Index (idx) der Datenbank (200) ist, ein Aktualisieren des Vertrauens-Endorsement-Werts t in der Datenbank (200),

a.3 ein Erhöhen des Indexwerts (idx), der dem aktualisierten Vertrauens-Endorsement-Wert t zugeordnet ist, um eins und ein Signieren des mindestens einen Vertrauens-Endorsement-Wertes t und des erhöhten Indexes (idx) der Datenbank (200) mit dem privaten Schlüssel des Knotens (110), wodurch eine Endorsement-Nachricht (201) erhalten wird;

a.4 ein Teilen der Endorsement-Nachricht (201) mit jedem Nachbarknoten (110).

4. Computer-implementiertes Verfahren nach Anspruch 3, wobei zwischen den Schritten a.2.2 und a.3, der Gossip-Algorithmus des Schritts a) ferner aufweist:

ob der mindestens eine Vertrauens-Endorsement-Wert t neu ist, ein Hinzufügen des detektierten Vertrauens-Endorsements (201) in der Datenbank (200).

5. Computer-implementiertes Verfahren nach einem der Ansprüche 3 oder 4, wobei im Schritt d) das Senden ferner aufweist:

- ein Zuordnen eines Index (idx) dem geänderten oder dem neuen Vertrauens-Endorsement-Wert t,
- ein Signieren des geänderten oder neuen Vertrauens-Endorsement-Werts t der Datenbank (200) und des ihm zugeordneten Index (idx) mit dem privaten Schlüssel des Knotens (110), dadurch eine Endorsement-Nachricht (201) erhaltend;
- ein Teilen der Endorsement-Nachricht (201) mit jedem Nachbarknoten (110).

6. Computer-implementiertes Verfahren nach einem der vorstehenden Ansprüche, wobei der Schritt des lokalen Berechnens in jedem Knoten (110) mindestens eines Vertrauens-Scores s, der einem anderen Knoten (110) des Netzwerks (100) basierend auf den in seiner eigenen Datenbank (200) enthaltenen Daten zugewiesen wird, aufweist:

   - ein lokales Erhalten mindestens einer direkten und/oder indirekten Endorsement-Verbindung eines Knotens (110), wobei eine indirekte Endorsement-Verbindung zwischen zwei Knoten (110) durch eine Konkatenation einer Vielzahl von direkten Endorsement-Verbindungen über mindestens einen Knoten (110) aufgebaut wird,
   - wenn es eine direkte Endorsement-Verbindung gibt, ein Einstellen des Vertrauens-Scores s als

$$s = t.$$

7. Computer-implementiertes Verfahren nach Anspruch 6, wobei der Schritt des lokalen Erhaltens mindestens einer direkten und/oder indirekten Endorsement-Verbindung eines Knotens (110) durch ein Ausführen einer Breitensuche oder einer Tiefensuche durch den Knoten (110) ausgeführt wird

8. Computer-implementiertes Verfahren nach einem der Ansprüche 6 oder 7, wobei, wenn die Endorsement-Verbindung zwischen dem Knoten (110), an dem der Schritt des lokalen Berechnens ausgeführt wird, und einem anderen Knoten (110) anders ist als eine direkte Endorsement-Verbindung und eine indirekte endorsement-Verbindung, der Schritt des lokalen Berechnens in jedem Knoten (110) mindestens eines Vertrauens-Scores s ferner Folgendes aufweist:

   - ein Einstellen des Vertrauens-Endorsement-Werts t zwischen den zwei Knoten auf einen Standard-Vertrauens-Endorsement-Wert, $t_d$, vorzugsweise ist $t_d$ 0,4, und

wobei, wenn die Endorsement-Verbindung zwischen einem Knoten, an dem der Schritt des lokalen Berechnens durchgeführt wird, und einem anderen Knoten anders ist als eine direkte Endorsement-Verbindung, weist der Schritt des lokalen Berechnens in jedem Knoten (110) mindestens eines Vertrauens-Scores s ferner ein Iterieren der folgenden Gleichung um eine Anzahl von Iterationen, n_max, für ein n von 0 bis n_max:

$$s_{ik;n+1} = \alpha s_{ik;n} + (1 - \alpha) \frac{\sum_{j \epsilon V} t_{jk} s_{ij;n}^{\beta+1}}{\sum_{j \epsilon V} a_{jk} s_{ij;n}^{\beta+\Phi(s_{ik;n})} + \epsilon}$$

wobei $\Phi(s_{ik;n})$ eine Funktion zwischen 0 und 1 ist, die monoton ansteigend ist basierend auf:

$$\sum_{j \epsilon V} a_{jk} s_{ij;n}^{\beta+1}$$

wobei der Grenzwert von $\Phi(s_{ik;n})$ zu 1 tendiert, wenn $\sum_{j \epsilon V} a_{jk} s_{ij;n}^{\beta+1}$ gegen unendlich tendiert, und die Funktion $\Phi(s_{ik;n})$ 0 ist, wenn $\sum_{j \epsilon V} a_{jk} s_{ij;n}^{\beta+1}$ 0 ist,

   worin $\beta$ eine ganze Zahl ist, wobei $\beta$ vorzugsweise eine Zahl zwischen 1 und 6 ist,
   wobei i der Knoten (110) ist, an dem das Berechnen lokal durchgeführt wird,
   wobei j ein Knoten mit einer direkten Endorsement-Verbindung mit dem Knoten k ist,
   wobei k ein Knoten (110) mit einer indirekten Endorsement-Verbindung mit dem Knoten (110) i ist,
   wobei $s_{ik;n}$ der Vertrauens-Score ist, den der Knoten (110) i dem Knoten (110) k in der Iteration n mit $s_{ik;0}$ gleich 0,5 verleiht,
   wobei V die Menge der Knoten (110) des Peer-to-Peer-Netzwerks (100) ist,

wobei $a_{ik}$ 0 ist, wenn es keine direkte Endorsement-Verbindung von dem Knoten (110) j zu dem Knoten (110) k gibt,

wobei $a_{ik}$ 1 ist, wenn eine direkte Endorsement-Verbindung besteht,

wobei $\alpha$ eine positive reelle Zahl ist, und

wobei $\varepsilon$ eine positive Zahl ist, vorzugsweise zehn bis minus acht.

**9.** Computer-implementiertes Verfahren nach dem vorstehenden Anspruch, wobei $\Phi$ ($s_{ik;n}$) anhand der folgenden Gleichung berechnet wird:

$$\Phi(s_{ik;n}) = tanh\left(3 \cdot \eta^{-1} \cdot \sum_{j\epsilon V} a_{jk} s_{ij;n}^{\beta+1}\right)$$

wobei $\eta$ eine ganze Zahl ist.

**10.** Computer-implementiertes Verfahren nach einem der Ansprüche 8 oder 9, wobei:

wenn die Iteration der Gleichung die n-Iteration ist, Folgendes eingestellt wird:

$$S_{ik} = S_{ij;n}$$

und/oder
die Gleichung iteriert wird, bis die folgende Bedingung erfüllt ist:

$$\frac{\left\|s_{ik;n+1} - s_{ik;n}\right\|}{\left\|s_{ik;n}\right\|} < \delta$$

wobei $\delta$ eine positive reelle Zahl ist, vorzugsweise 0,005, und Folgendes eingestellt wird:

$$S_{ik} = S_{ij;n+1} \; .$$

**11.** Computer-implementiertes Verfahren nach einem der vorstehenden Ansprüche, wobei das lokale Validieren mindestens eines Knotens (110) ein Einstellen eines Schwellenwerts und ein Vergleichen des Schwellenwerts mit dem Wert des mindestens einen Vertrauens-Scores s umfasst, der von jedem Knoten (110) jedem anderen Knoten (110) zugewiesen wird.

**12.** Datenverarbeitungssystem, das Mitteln zum Ausführen der Schritte des Verfahrens nach einem der Ansprüche 1 bis 11 aufweist.

**13.** Computerprogrammprodukt, das Anweisungen aufweist, die, wenn das Programm von mindestens drei Computern ausgeführt wird, die Computer veranlassen, die Schritte des Verfahrens nach einem der Ansprüche 1 bis 11 auszuführen.

**14.** Computer-lesbares Speichermedium, das Anweisungen aufweist, die, wenn sie von mindestens drei Computern ausgeführt werden, die Computer veranlassen, die Schritte des Verfahrens nach einem der Ansprüche 1 bis 11 auszuführen.

**Revendications**

**1.** Procédé mis en œuvre par ordinateur pour la validation d'une signature numérique d'au moins un nœud (110) dans un réseau de pair à pair (100), dans lequel ledit réseau (100) comprend au moins trois nœuds (110), par exemple des nœuds i, j et w,

dans lequel chaque nœud (110) est configuré pour stocker une base de données (200) et au moins un score de confiance s, par exemple un score de confiance $s_{ij}$ ou $s_{iw}$ d'un nœud (110) i par rapport à un autre nœud (110) j ou w,

dans lequel chaque base de données (200) est configurée pour stocker au moins une valeur d'approbation de confiance t d'un nœud (110) par rapport à un autre nœud (110) définissant une liaison d'approbation directe entre lesdits nœuds (110), par exemple une valeur d'approbation de confiance $t_{ij}$ d'un nœud (110) i par rapport à un autre nœud (110) j définissant une liaison d'approbation directe entre les nœuds (110) i et j,

dans lequel la valeur d'approbation de confiance t est supérieure ou égale à 0 et inférieure ou égale à 1, et le procédé mis en œuvre par ordinateur comprenant les étapes de,

a) l'exécution, dans la pluralité de nœuds (110), d'un algorithme de bavardage, la réception, dans chaque nœud, d'au moins un message d'approbation (201) et l'obtention, dans chaque nœud (110), d'une version mise à jour de sa base de données (200), dans lequel la base de données mise à jour (200) dans chaque nœud (110) comprend les valeurs d'approbation de confiance t d'au moins un nœud (110) différent du réseau de pair à pair (100) ; par exemple, la base de données mise à jour (200) du nœud (100) i comprend au moins la valeur d'approbation de confiance $t_{jw}$ du nœud (100) j par rapport au nœud (110) w ;

b) le calcul, de manière locale dans chaque nœud (110), d'un score de confiance s attribué à un autre nœud (110) du réseau (100), pour chaque nœud (110) de sa base de données (200), sur la base des données contenues dans ladite base de données (200) ; par exemple, le nœud (110) i calcule les scores de confiance $s_{ij}$ et $s_{iw}$ attribués aux nœuds (100) j et w ; et

c) la validation, de manière locale, de chaque signature numérique reçue dans chaque nœud (110), dans lequel chaque signature numérique est diffusée par le au moins un nœud (110) de sa base de données (200), sur la base de la valeur dudit score de confiance (s) du réseau de pair à pair (100), l'obtention, dans chaque nœud (110), d'une validation différente de chaque signature numérique diffusée par chaque nœud (110) du réseau (100) ; par exemple, si le score de confiance d'un nœud i par rapport à un nœud j, $s_{ij}$, satisfait une certaine condition, alors les signatures numériques diffusées par le nœud j et reçues par le nœud i seront validées, et

d) s'il existe une modification dans au moins une valeur d'approbation de confiance t d'une base de données (200) d'un nœud (110) ou au moins une nouvelle valeur d'approbation de confiance t, l'envoi de la valeur d'approbation de confiance t modifiée ou nouvelle à chaque nœud (110) voisin et l'exécution de l'étape a), et

e) si un nœud (110) est supprimé ou un nouveau nœud (110) est ajouté dans le réseau de pair à pair (100), l'exécution de l'étape a).

2. Procédé mis en œuvre par ordinateur selon la revendication 1, dans lequel les étapes b) à e) sont réalisées d'une manière simultanée par rapport à l'étape a).

3. Procédé mis en œuvre par ordinateur selon l'une quelconque des revendications précédentes, dans lequel chaque nœud (110) comprend au moins une paire de clés de nœud publique et privée et les clés publiques du reste des nœuds (110) du réseau de pair à pair (100), dans lequel les paires de clés de nœud publique et privée sont une clé publique et une clé privée se rapportant à chaque nœud (110),

dans lequel le au moins un message d'approbation (201) comprend au moins une valeur d'approbation de confiance t, une valeur d'indice (idx) associée à chaque valeur d'approbation de confiance t et signature d'approbation ($\sigma_1$, σ2) ; et

dans lequel ladite signature d'approbation ($\sigma1$, o2) est signée avec la clé privée du nœud qui a envoyé le au moins un message d'approbation (201), et

dans lequel l'algorithme de bavardage de l'étape a) comprend les étapes de :

a.1 dans chaque nœud (110), l'écoute des autres nœuds (110) du réseau (100) et la détection d'au moins un message d'approbation (201) provenant desdits autres nœuds (110) ; et

a.2 pour chaque message d'approbation (201) détecté :

a.2.1 la vérification de la signature d'approbation ($\sigma1$, $\sigma2$) avec la clé publique dudit autre nœud (110) ;

a.2.2 si au moins une valeur d'approbation de confiance t du message d'approbation (210) existe déjà dans la base de données (200) et l'indice (idx) associé du message d'approbation (210) est supérieur à l'indice (idx) de la base de données (200), la mise à jour de la valeur d'approbation de confiance t dans la base de données (200),

a.3 l'augmentation de la valeur d'indice (idx) associée à la valeur d'approbation de confiance t mise à jour de un et la signature de ladite au moins une valeur d'approbation de confiance t et de l'indice (idx) augmenté de la base de données (200) avec la clé privée du nœud (110) en obtenant un message d'approbation (201) ;
a.4 le partage du message d'approbation (201) avec chaque nœud (110) voisin.

**4.** Procédé mis en œuvre par ordinateur selon la revendication 3, dans lequel entre les étapes a.2.2 et a.3, l'algorithme de bavardage de l'étape a) comprend en outre :
si la au moins une valeur d'approbation de confiance t est nouvelle, l'ajout de l'approbation de confiance (201) détectée dans la base de données (200).

**5.** Procédé mis en œuvre par ordinateur selon l'une quelconque des revendications 3 ou 4, dans lequel l'étape d) d'envoi comprend en outre :

- l'association d'un indice (idx) avec la valeur d'approbation de confiance t modifiée ou nouvelle,
- la signature de la valeur d'approbation de confiance t modifiée ou nouvelle de la base de données (200) et de l'indice (idx) associé avec la clé privée du nœud (110), en obtenant ainsi un message d'approbation (201) ;
- le partage du message d'approbation (201) avec chaque nœud (110) voisin.

**6.** Procédé mis en œuvre par ordinateur selon l'une quelconque des revendications précédentes, dans lequel ladite étape de calcul, de manière locale dans chaque nœud (110), d'au moins un score de confiance s attribué à un autre nœud (110) du réseau (100) sur la base des données contenues dans sa propre base de données (200), comprend

- l'obtention, de manière locale, d'au moins une liaison d'approbation directe et/ou indirecte d'un nœud (110), dans lequel une liaison d'approbation indirecte entre deux nœuds (110) est établie par une concaténation d'une pluralité de liaisons d'approbation directes par le biais d'au moins un nœud (110),
- s'il existe une liaison d'approbation directe, l'établissement du score de confiance s comme étant

$$s = t.$$

**7.** Procédé mis en œuvre par ordinateur selon la revendication 6, dans lequel l'étape d'obtention, de manière locale, d'au moins une liaison d'approbation directe et/ou indirecte d'un nœud (110) est réalisée par le lancement d'une recherche d'abord en ampleur ou d'une recherche d'abord en profondeur par ledit nœud (110).

**8.** Procédé mis en œuvre par ordinateur selon l'une quelconque des revendications 6 ou 7, dans lequel si la liaison d'approbation entre le nœud (110), où l'étape de calcul de manière locale a été réalisée, et un autre nœud (110) est différente d'une liaison d'approbation directe et d'une liaison d'approbation indirecte, l'étape de calcul, de manière locale dans chaque nœud (110), d'au moins un score de confiance s comprend en outre

- l'établissement de la valeur d'approbation de confiance t entre lesdits deux nœuds sur une valeur d'approbation de confiance par défaut, $t_d$, de préférence $t_d$ vaut 0,4, et

dans lequel si la liaison d'approbation entre un nœud, où l'étape de calcul de manière locale a été réalisée, et un autre nœud est différente d'une liaison d'approbation directe, l'étape de calcul, de manière locale dans chaque nœud (110), d'au moins un score de confiance s comprend en outre l'itération de l'équation suivante un nombre d'itérations n_max,
pour n de 0 à n_max :

$$s_{ik;n+1} = \alpha s_{ik;n} + (1-\alpha) \frac{\Sigma_{j\epsilon V} t_{jk} s_{ij;n}^{\beta+1}}{\Sigma_{j\epsilon V} a_{jk} s_{ij;n}^{\beta+\Phi(s_{ik;n})} + \epsilon}$$

dans lequel
dans lequel $\Phi(s_{ik;n})$ est une fonction croissante monotone entre 0 et 1 basée sur :

$$\sum_{j \epsilon V} a_{jk} s_{ij;n}^{\beta+1}$$

dans lequel la limite de $\Phi$ ($s_{ik;n}$) tend vers 1 lorsque $\Sigma_{j \epsilon V} a_{jk} s_{ij;n}^{\beta+1}$ tend vers l'infini, et la fonction $\Phi$ ($s_{ik;n}$)

vaut 0 lorsque $\Sigma_{j \epsilon V} a_{jk} s_{ij;n}^{\beta+1}$ vaut 0,

dans lequel $\beta$ est un nombre entier, $\beta$ étant de préférence un nombre entre 1 et 6,

i est le nœud (110) où le calcul est réalisé de manière locale,

j est un nœud ayant une liaison d'approbation directe avec le nœud k

k est un nœud (110) ayant une liaison d'approbation indirecte avec le nœud (110) i,

$s_{ik;n}$ est le score de confiance donné par le nœud (110) i au nœud (110) k à l'itération n, avec $s_{ik;0}$ égal à 0,5,

V est un ensemble de nœuds (110) du réseau de pair à pair (100),

$a_{jk}$ vaut 0 s'il n'existe pas de liaison d'approbation directe du nœud (110) j au nœud (110) k,

$a_{kj}$ vaut 1 s'il existe une liaison d'approbation directe,

$\alpha$ est un nombre réel positif, et

$\in$ est un nombre positif, de préférence de dix à moins huit.

9. Procédé mis en œuvre par ordinateur selon la revendication précédente, dans lequel $\Phi$ ($s_{ik;n}$) est calculé à partir de l'expression suivante :

$$\Phi\left(s_{ik;n}\right) = \tanh\left(3 \cdot \eta^{-1} \cdot \sum_{j \epsilon V} a_{jk} s_{ij;n}^{\beta+1}\right)$$

dans lequel $\eta$ est un nombre entier.

10. Procédé mis en œuvre par ordinateur selon l'une quelconque des revendications 8 ou 9, dans lequel

si l'itération de l'équation est la n-itération, l'établissement de

$$s_{ik} = s_{ij;n}$$

et/ou

l'itération de l'équation jusqu'à ce que la condition suivante soit respectée,

$$\frac{\left\|s_{ik;n+1} - s_{ik;n}\right\|}{\left\|s_{ik;n}\right\|} < \delta$$

dans lequel $\delta$ est un nombre réel positif, de préférence 0,005, et l'établissement de

$$s_{ik} = s_{ij;n+1}.$$

11. Procédé mis en œuvre par ordinateur selon l'une quelconque des revendications précédentes, dans lequel la validation, de manière locale, d'au moins un nœud (110) comprend l'établissement d'une valeur seuil et la comparaison de ladite valeur de seuil avec la valeur dudit au moins un score de confiance s attribué par chaque nœud (110) à chaque autre nœud (110).

12. Système de traitement de données comprenant des moyens pour effectuer les étapes du procédé selon l'une quelconque des revendications 1 à 11.

**13.** Produit programme d'ordinateur comprenant des instructions qui, lorsque le programme est exécuté par au moins trois ordinateurs, amènent les ordinateurs à effectuer les étapes du procédé selon l'une quelconque des revendications 1 à 11.

**14.** Support de stockage lisible par ordinateur comprenant des instructions qui, lors de leur exécution par au moins trois ordinateurs, amènent les ordinateurs à effectuer les étapes du procédé selon l'une quelconque des revendications 1 à 11.

Fig. 1

node 0

$t_{01} = 0.9$

$t_{02} = 0.1$

$sk_0 \quad pk_0 \quad pk_1$

$pk_2 \quad pk_3 \quad pk_4$

$pk_5 \quad pk_6 \quad pk_7$

$t_{13} = 0.6 \quad \sigma_1 ; 1$

$t_{12} = 0.1 \quad \sigma_1 ; 1$

idx

$t_{20} = 0.1 \quad \sigma_2 ; 1$

Fig. 2

node 0

200

$t_{01} = 0.9$

$t_{02} = 0.1$

200  node 1

$t_{13} = 0.6$

$t_{12} = 0.1$

200  node 2

$t_{20} = 0.9$

200  node 3

$t_{31} = 0.9$

$t_{37} = 0.5$

200  node 4

$t_{46} = 0.8$

200  node 5

$t_{56} = 0.9$

200  node 6

$t_{65} = 0.7$

200  node 7

**Fig. 3a**

node 0

$t_{01} = 0.9$

$t_{02} = 0.1$

201  $t_{13} = 0.6 \quad \sigma_1 ; 1$

$t_{12} = 0.1 \quad \sigma_1 ; 1$

$t_{20} = 0.9 \quad \sigma_2 ; 1$

node 1

$t_{13} = 0.6$

$t_{12} = 0.1$

$t_{01} = 0.9 \quad \sigma_0 ; 1$

$t_{02} = 0.1 \quad \sigma_0 ; 1$

$t_{46} = 0.8 \quad \sigma_4 ; 1$

node 2

$t_{20} = 0.9$

$t_{01} = 0.9 \quad \sigma_0 ; 1$

$t_{02} = 0.1 \quad \sigma_0 ; 1$

$t_{31} = 0.6 \quad \sigma_3 ; 1$

$t_{37} = 0.1 \quad \sigma_3 ; 1$

node 3

$t_{31} = 0.9$

$t_{37} = 0.5$

$t_{13} = 0.6 \quad \sigma_1 ; 1$

$t_{12} = 0.1 \quad \sigma_1 ; 1$

$t_{20} = 0.1 \quad \sigma_2 ; 1$

201

201

node 4

$t_{46} = 0.8$

201

$t_{13} = 0.6 \quad \sigma_1 ; 1$

$t_{12} = 0.1 \quad \sigma_1 ; 1$

201

$t_{56} = 0.9 \quad \sigma_5 ; 1$

$t_{65} = 0.7 \quad \sigma_6 ; 1$

node 5

$t_{56} = 0.9$

$t_{46} = 0.8 \quad \sigma_4 ; 1$

$t_{65} = 0.7 \quad \sigma_6 ; 1$

node 6

$t_{65} = 0.7$

$t_{46} = 0.8 \quad \sigma_4 ; 1$

$t_{56} = 0.9 \quad \sigma_5 ; 1$

$p_5$

node 7

$t_{31} = 0.9 \quad \sigma_3 ; 1$

$t_{37} = 0.5 \quad \sigma_3 ; 1$

201

201

201

**Fig. 3b**

33

node 0

$t_{01} = 0.9$

$t_{02} = 0.1$

201

$t_{13} = 0.6 \quad \sigma_1 ; 1000$

$t_{12} = 0.1 \quad \sigma_1 ; 1000$

$t_{46} = 0.8 \quad \sigma_1 ; 1000$

$t_{56} = 0.9 \quad \sigma_1 ; 1000$

$t_{65} = 0.7 \quad \sigma_6 ; 1000$

$t_{20} = 0.9 \quad \sigma_2 ; 1000$

$t_{31} = 0.6 \quad \sigma_2 ; 1000$

$t_{37} = 0.1 \quad \sigma_3 ; 1000$

201

Fig. 3c

Fig. 4a

Fig. 4b

Fig. 4c

node 2

$t_{20} = 0.9$
$t_{23} = 0.7$

$t_{01} = 0.9 \quad \sigma_0 ; 1$
$t_{02} = 0.1 \quad \sigma_0 ; 1$

201

$t_{31} = 0.6 \quad \sigma_3 ; 1$
$t_{37} = 0.1 \quad \sigma_3 ; 1$

Fig. 5a

node 0

$t_{01} = 0.9$
$t_{02} = 0.1$

$t_{13} = 0.6 \quad \sigma_1 ; 1$
$t_{12} = 0.1 \quad \sigma_1 ; 1$

201

$t_{20} = 0.9 \quad \sigma_2 ; 2$
$t_{23} = 0.7 \quad \sigma_2 ; 2$

$t_{43} = 0.1 \quad \sigma_2 ; 2$
$t_{53} = 0.1 \quad \sigma_2 ; 2$
$t_{63} = 0.1 \quad \sigma_2 ; 2$

Fig. 5b

Fig. 5c

**REFERENCES CITED IN THE DESCRIPTION**

**Patent documents cited in the description**

- US 7213047 B2
- US 20030028585 A1